# EUROPÄISCHE PATENTANMELDUNG

(11) **EP 2 534 952 A1**
(43) Veröffentlichungstag der Anmeldung: **19.12.2012**
(21) Anmeldenummer: 12177999.5
(22) Anmeldetag: 21.05.2008
(51) Int. Cl.: A01N 43/80, A01N 41/06, A01N 59/00, A01P 7/04, A01P 7/02

(54) **Insektizide Zusammensetzungen von 2-Cyanobenzolsulfonamidverbindungen und ihre isomeren Formen mit verbesserter Wirkung**

(30) Priorität: 25.05.2007 DE 102007024575
(62) Teilanmeldung aus: 08758649.1
(71) Anmelder: Bayer CropScience AG, 40789 Monheim am Rhein (DE)
(72) Erfinder: Fischer, Reiner, Dr., 40789 Monheim (DE); Alig, Bernd, Dr., 53639 Königswinter (DE); Arnold, Christian, Dr., 049514 Singapore (SG); Pontzen, Rolf, Dr., 42799 Leichlingen (DE); Müller, Klaus-Helmut, Dr., 40593 Düsseldorf (DE)
(74) Vertreter: Bayer Intellectual Property GmbH

(57) **Zusammenfassung**

Die vorliegende Erfindung beinhaltet 2-Cyanobenzolsulfonsäureamide der Formel (I) und deren isomere Formen (I-A) und (I-B) 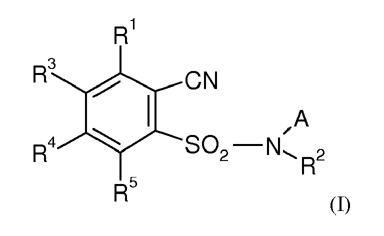 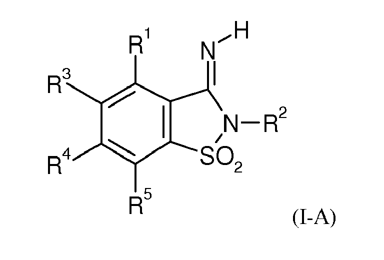 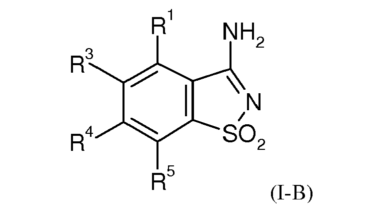 wobei
R₁, R₂, R₃, R₄, R₅ und A die oben angegebene Bedeutung haben- zur Bekämpfung von tierischen Schädlingen unter Verwendung von Penetrationsförderem und/oder Ammonium- oder Phosphoniumsalzen.

## Beschreibung

Die Erfindung betrifft die Steigerung der Wirkung von Pflanzenschutzmitteln insbesondere von 2-Cyanobenzolsulfonamidverbindungen der Formel (I), deren isomeren Formen (I-A) und (I-B), bei denen die Variablen R¹ bis R⁵ wie in Anspruch 2 definiert sind, und/oder ihre landwirtschaftlich nützlichen Salze durch die Zugabe von Ammonium- oder Phosphoniumsalzen und gegebenenfalls Penetrationsförderen, sowie die entsprechenden Mittel, Verfahren zu ihrer Herstellung und ihre Anwendung im Pflanzenschutz, insbesondere als Insektizide und/oder Akarizide. Die vorliegende Erfindung betrifft weiterhin die Verwendung von Verbindungen (I), (I-A) oder (I-B) und/oder ihren Salzen durch die Zugabe von Ammonium- oder Phosphoniumsalzen für die Bekämpfung von tierischen Schädlingen; landwirtschaftliche Zusammensetzungen, die eine pestizidwirksame Menge an mindestens einer Verbindung der allgemeinen Formel I, (I-A) oder (I-B) und/oder an mindestens einem landwirtschaftlich nützlichen Salz von I, (I-A) oder (I-B) und an mindestens einem inerten flüssigen und/oder festen landwirtschaftlich annehmbaren Träger sowie mindestens einen Penetrationsförderer und/oder Ammonium-oder Phosphoniumsalze enthalten; sowie ein Verfahren zur Bekämpfung von tierischen Schädlingen, bei dem man die tierischen Schädlinge, ihre Umwelt, ihre Brutstätten, ihre Nahrungsquelle, die Pflanze, den Samen, den Boden, die Oberfläche, die Substanz oder die Umwelt, in der die tierischen Schädlinge wachsen oder wachsen können, oder die Substanzen, Pflanzen, Samen, Böden, Oberflächen oder Räume, die gegen Befall oder Verseuchung mit den Tieren geschützt werden sollen, mit einer pestizidwirksamen Menge an mindestens einer 2-Cyanobenzolsulfonamidverbindung der allgemeinen Formel (I),(I-A) oder (I-B) und/oder mindestens einem landwirtschaftlich annehmbaren Salz davon behandelt.

Tierische Schädlinge zerstören stehende und geerntete Kulturen und greifen Holzgebäude und - bauwerke an, wodurch sie große wirtschaftliche Verluste bei der Nahrungsmittelversorgung sowie an Immobilien verursachen. Obwohl eine Vielzahl von pestiziden Mitteln bekannt ist, besteht nach wie vor ein Bedarf an neuen Mitteln für die Bekämpfung von tierischen Schädlingen, da die zu bekämpfenden Schädlinge eine Resistenz gegen diese Mittel entwickeln können. Insbesondere sind tierische Schädlinge wie Insekten und Spinnmilben schwer wirksam bekämpfbar.

Die EP 0033984 beschreibt substituierte 2-Cyanobenzolsulfonamidverbindungen mit blattlausabtötender Wirksamkeit. Die Benzolsulfonamidverbindungen tragen vorzugsweise ein Fluoratom oder Chloratom in 3-Stellung des Phenylrings. Weiterhin bekannt wurden 2-Cyanobenzolsulfonamide in WO 2005/035486 und WO 2006/056433 mit insektizider Wirkung. Deren Anwendung für Boden- und Saatgutanwendungen ist in WO2006/100271 und WO 2006/100288 beschrieben. Außerdem sind auch noch isomere Formen der 2-Cyanobenzolsulfonamide sowie Derivate der isomeren Formen und deren insektizide Wirkung beschrieben in EP 86748, EP 110829, EP 133418, EP 138762, DE 3544436, EP 191734, EP 207891, JP 1989/319467, JP 1990/006496. Weiterhin sind 2-Cyanobenzolsulfonamide beschrieben in WO 2007/060220 und WO 2008/031712. Auf diese Veröffentlichungen wird hiermit ausdrücklich Bezug genommen.

Alle in den erfindungsgemäßen Mitteln enthaltenen Wirkstoffe sind bereits bekannt und können nach im Stand der Technik beschriebenen Verfahren (siehe oben genannte Referenzen) hergestellt werden. Ihre pestizide Wirkung ist gut, jedoch insbesondere bei niedrigen Aufwandmengen und Konzentrationen nicht immer voll zufrieden stellend. Es besteht deshalb ein Bedarf für eine Wirkungssteigerung der die Verbindungen enthaltenden Pflanzenschutzmittel.

Ziel der vorliegenden Erfindung sind daher Mittel und Verfahren zur Verbesserung der Wirksamkeit von Verbindungen der allgemeinen Formel (I), (I-A) und (I-B), insbesondere gegen Insekten und Spinnmilben, die schwierig zu bekämpfen sind.

In der Literatur wurde bereits beschrieben, dass sich die Wirkung verschiedener Wirkstoffe durch Zugabe von Ammoniumsalzen steigern lässt. Dabei handelt es sich jedoch um als Detergens wirkende Salze (z.B. WO 95/017817) bzw. Salze mit längeren Alkyl- und / oder Arylsubstituenten, die permeabilisierend wirken oder die Löslichkeit des Wirkstoffs erhöhen (z.B. EP-A 0 453 086, EP-A 0 664 081, FR-A 2 600 494, US 4 844 734, US 5 462 912, US 5 538 937, US-A 03/0224939, US-A 05/0009880, US-A 05/0096386). Weiterhin beschreibt der Stand der Technik die Wirkung nur für bestimmte Wirkstoffe und / oder bestimmte Anwendungen der entsprechenden Mittel. In wieder anderen Fällen handelt es sich um Salze von Sulfonsäuren, bei denen die Säuren selber paralysierend auf Insekten wirken (US 2 842 476). Eine Wirkungssteigerung z.B. durch Ammoniumsulfat ist beispielsweise für die Herbizide Glyphosat und Phosphinothricin beschrieben (US 6 645 914, EP-A2 0 036 106). Eine entsprechende Wirkung bei Insektiziden wird durch diesen Stand der Technik weder offenbart noch nahegelegt.

Auch der Einsatz von Ammoniumsulfat als Formulierhilfsmittel ist für bestimmte Wirkstoffe und Anwendungen beschrieben (WO 92/16108), es dient dort aber zur Stabilisierung der Formulierung, nicht zur Wirkungssteigerung.

Es wurde nun völlig überraschend gefunden, dass sich die Wirkung von Insektiziden und/oder Akariziden aus der Klasse der 2-Cyanobenzolsulfonamide (I), und deren isomeren Formen (I-A) und (I-B) durch den Zusatz von Ammonium- oder Phosphoniumsalzen zur Anwendungslösung oder durch den Einbau dieser Salze in eine Formulierung enthaltend 2-Cyanobenzolsulfonamide (I), und deren isomere Formen (I-A) und (I-B), deutlich steigern lässt. Gegenstand der vorliegenden Erfindung ist also die Verwendung von Ammonium- oder Phosphoniumsalzen zur Wirkungssteigerung von Pflanzenschutzmitteln, die insektizid und / oder akarizid wirksame 2-Cyanobenzolsulfonamide (I), und deren isomeren Formen (I-A) und (I-B) als Wirkstoff enthalten. Gegenstand der Erfindung sind ebenfalls Mittel, die insektizid wirksame 2-Cyanobenzolsulfonamide (I), und deren isomere Formen (I-A) und (I-B) und die Wirkung steigernde Ammonium- oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten und/oder Spinnmilben.

Die 2-Cyanobenzolsulfonamidverbindungen (I) und deren isomere Formen (I-A), (I-B) sind beschrieben durch die allgemeinen Formeln 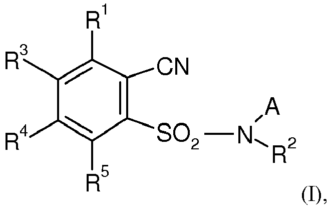 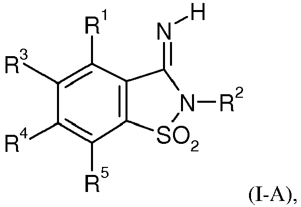 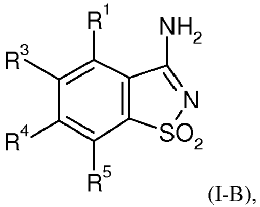 in welcher
- A: für Wasserstoff, C₁-C₆-Alkyl, C₂-C₆-Alkenyl steht
- R¹: für Wasserstoff, Halogen, C₁-C₄-Alkyl, C₁-C₄-Halogenalkyl, C₁-C₄-Alkoxy oder C₁-C₄-Halogenalkoxy steht;
- R²: für Wasserstoff, C₁-C₆-Alkyl, C₂-C₆-Alkenyl, C₂-C₆-Alkinyl, C₃-C₈-Cycloalkyl oder C₁-C₄-Alkoxy, wobei die fünf letztgenannten Reste unsubstituiert, teilweise oder vollständig halogeniert sein können und/oder einen, zwei oder drei Reste aus der Gruppe C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₁-C₄-Alkylcarbonyl, C₁-C₄-Alkoxycarbonyl, Cyano, Amino, (C₁-C₄-Alkyl)amino, Di-(C₁-C₄-alkyl)amino, C₃-C₈-Cycloalkyl und Phenyl tragen können, wobei das Phenyl unsubstituiert, teilweise oder vollständig halogeniert sein kann und/oder einen, zwei oder drei Substituenten aus der Gruppe C₁-C₄-Alkyl, C₁-C₄-Halogenalkyl, C₁-C₄-Alkoxy, C₁-C₄-Halogenalkoxy tragen kann, steht;
- R³, R⁴ und R⁵: unabhängig voneinander für Wasserstoff, Halogen, Cyano, Nitro, C₁-C₆-Alkyl, C₃-C₈-Cycloalkyl, C₁-C₄-Halogenalkyl, C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₂-C₆-Alkenyl, C₂-C₆-Alkinyl, C₁-C₄-Alkoxycarbonyl, Amino, (C₁-C₄-Alkyl)amino, Di-(C₁-C₄-alkyl)amino, Aminocarbonyl, (C₁-C₄-Alkyl)aminocarbonyl und Di-(C₁-C₄-alkyl)aminocarbonyl stehen.

Dabei können Verbindungen der Formel (I), in welchen A für Wasserstoff steht, gegebenenfalls in der isomeren Form (I-A) vorliegen; Verbindungen der Formel (I), in welchen A und R² für Wasserstoff stehen, können gegebenenfalls in der isomeren Form (I-B) vorliegen.

Die Verbindungen der Formel (I) und deren isomere Formen (I-A) und (I-B) besitzen eine breite insektizide und/oder akarizide Wirkung, die Wirkung lässt im Einzelnen aber zu wünschen übrig.

Die Wirkstoffe können in den erfindungsgemäßen Zusammensetzungen in einem breiten Konzentrationsbereich eingesetzt werden. Die Konzentration der Wirkstoffe in der Formulierung beträgt dabei üblicherweise 0,1 - 50 Gew.-%.

Ammonium- und Phosphoniumsalze, die erfindungsgemäß die Wirkung von Pflanzenschutzmitteln enthaltend 2-Cyanobenzolsulfonamide und deren isomere Formen (I-A) und (I-B) steigern, werden durch Formel (II) definiert 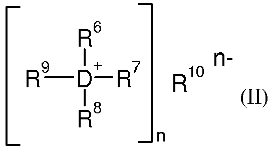 in welcher
- D: für Stickstoff oder Phosphor steht,
- D: bevorzugt für Stickstoff steht,
- R⁶, R⁷, R⁸ und R⁹: unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
- R⁶, R⁷, R⁸ und R⁹: bevorzugt unabhängig voneinander für Wasserstoff oder jeweils gegebenenfalls substituiertes C₁-C₄-Alkyl stehen, wobei die Substituenten aus Halogen, Nitro und Cyano ausgewählt sein können,
- R⁶, R⁷, R⁸ und R⁹: besonders bevorzugt unabhängig voneinander für Wasserstoff, Methyl, Ethyl, n-Propyl, i-Propyl, n-Butyl, i-Butyl, s-Butyl oder t-Butyl stehen,
- R⁶, R⁷, R⁸ und R⁹: ganz besonders bevorzugt für Wasserstoff stehen,
- n: für 1, 2, 3 oder 4 steht,
- n: bevorzugt für 1 oder 2 steht,
- R¹⁰: für ein anorganisches oder organisches Anion steht,
- R¹⁰: bevorzugt für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat oder Oxalat steht,
- R¹⁰: besonders bevorzugt für Laktat, Sulfat, Monohydrogenphosphat, Dihydrogenphosphat, Nitrat, Thiosulfat, Thiocyanat, Citrat, Oxalat oder Formiat steht.
- R¹⁰: ganz besonders bevorzugt für Sulfat steht.

Die Ammonium- und Phosphoniumsalze der Formel (II) können in einem breiten Konzentrationsbereich zur Steigerung der Wirkung von Pflanzenschutzmitteln enthaltend 2-Cyanobenzolsulfonamide und/oder deren isomere Formen eingesetzt werden. Im Allgemeinen werden die Ammonium- oder Phosphoniumsalze im anwendungsfertigen Pflanzenschutzmittel in einer Konzentration von 0,5 bis 80 mmol/l, bevorzugt 0,75 bis 37,5 mmol/l, besonders bevorzugt 1,5 bis 25 mmol/l eingesetzt. Im Fall eines formulierten Produktes wird die Ammonium- und/oder Phosphoniumsalzkonzentration in der Formulierung so gewählt, dass sie nach Verdünnung der Formulierung auf die gewünschte Wirkstoffkonzentration in diesen angegebenen allgemeinen, bevorzugten oder besonders bevorzugten Bereichen liegt. Die Konzentration des Salzes in der Formulierung beträgt dabei üblicherweise 1 - 50 Gew.-%.

In einer bevorzugten Ausführungsform der Erfindung wird den Pflanzenschutzmitteln zur Wirkungssteigerung nicht nur ein Ammonium- und/oder Phosphoniumsalz, sondern zusätzlich ein Penetrationsförderer zugegeben. Es ist als völlig überraschend zu bezeichnen, dass selbst in diesen Fällen eine noch weiter gehende Wirkungssteigerung zu beobachten ist. Gegenstand der vorliegenden Erfindung ist also ebenfalls die Verwendung einer Kombination von Penetrationsförderer und Ammonium- und/oder Phosphoniumsalzen zur Wirkungssteigerung von Pflanzenschutzmitteln, die akarizid/insektizid wirksame, 2-Cyanobenzolsulfonamide und/oder deren isomere Formen (I-A) und (I-B) als Wirkstoff enthalten. Gegenstand der Erfindung sind ebenfalls Mittel, die insektizid wirksame 2-Cyanobenzolsulfonamide und/oder deren isomere Formen (I-A) und (I-B), Penetrationsförderer und Ammonium- und/oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten.

Als Penetrationsförderer kommen im vorliegenden Zusammenhang alle diejenigen Substanzen in Betracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die in der Literatur (Baur et al., 1997, Pesticide Science 51, 131-152) beschriebene Methode kann zur Bestimmung dieser Eigenschaft eingesetzt werden.

Als Penetrationsförderer kommen beispielsweise Alkanol-alkoxylate in Betracht. Erfindungsgemäße Penetrationsförderer sind Alkanol-alkoxylate der Formel

R-O-(-AO)ᵥ-R' (III)

in welcher
- R: für geradkettiges oder verzweigtes Alkyl mit 4 bis 20 Kohlenstoffatomen steht,
- R': für Wasserstoff, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- v: für Zahlen von 2 bis 30 steht.

Eine bevorzugte Gruppe von Penetrationsförderern sind Alkanolalkoxylate der Formel

R-O-(-EO-)ₙ-R' (III-a)

in welcher
- R: die oben angegebene Bedeutung hat,
- R': die oben angegebene Bedeutung hat,
- EO: für -CH₂-CH₂-O- steht und
- n: für Zahlen von 2 bis 20 steht.

Eine weitere bevorzugte Gruppe von Penetrationsförderern sind Alkanol-alkoxylate der Formel

R-O-(-EO-)ₚ-(-PO-)_{q}-R' (III-b)

in welcher
- R: die oben angegebene Bedeutung hat,
- R': die oben angegebene Bedeutung hat,
- EO: für -CH₂-CH₂-O- steht
- PO: für 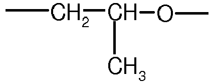 steht.
- p: für Zahlen von 1 bis 10 steht und
- q: für Zahlen von 1 bis 10 steht.

Eine weitere bevorzugte Gruppe von Penetrationsförderern sind Alkanol-Alkoxylate der Formel

R-O-(-PO-)ᵣ-(EO-)ₛ-R' (III-c)

in welcher
- R: die oben angegebene Bedeutung hat,
- R': die oben angegebene Bedeutung hat,
- EO: für -CH₂-CH₂-O- steht,
- PO: für 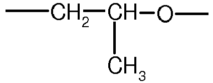 steht,
- r: für Zahlen von 1 bis 10 steht und
- s: für Zahlen von 1 bis 10 steht.

Eine weitere bevorzugte Gruppe von Penetrationsförderern sind Alkanol-alkoxylate der Formel

R-O-(-EO-)ₚ-(-BO-)_{q}-R' (III-d)

in welcher

R und R^{'} die oben angegebenen Bedeutungen haben,
- EO: für CH₂-CH₂-O- steht,
- BO: für 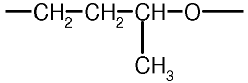 steht,
- p: für Zahlen von 1 bis 10 steht und
- q: für Zahlen von 1 bis 10 steht.

Eine weitere bevorzugte Gruppe von Penetrationsförderern sind Alkanol-alkoxylate der Formel

R-O-(-BO-)ᵣ-(-EO-)ₛ-R' (III-e)

in welcher

R und R^{'} die oben angegebenen Bedeutungen haben,
- BO: für 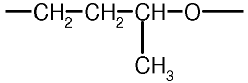 steht,
- EO: für CH₂-CH₂-O- steht,
- r: für Zahlen von 1 bis 10 steht und
- s: für Zahlen von 1 bis 10 steht.

Eine weitere bevorzugte Gruppe von Penetrationsförderern sind Alkanol-Alkoxylate der Formel

CH₃-(CH₂)ₜ-CH₂-O-(-CH₂-CH₂-O-)ᵤ-R' (III-f)

in welcher
- R': die oben angegebene Bedeutung hat,
- t: für Zahlen von 8 bis 13 steht
- u: für Zahlen von 6 bis 17 steht.

In den zuvor angegebenen Formeln steht
- R: vorzugsweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.

Als Beispiel für ein Alkanol-Alkoxylat der Formel (III-c) sei 2-Ethyl-hexyl-alkoxylat der Formel 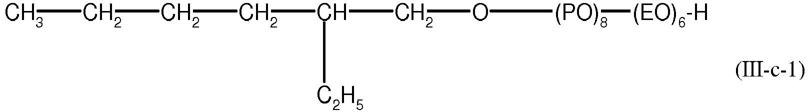 in welcher
- EO: für -CH₂-CH₂-O- steht,
- PO: für 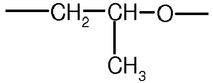 steht und
die Zahlen 8 und 6 Durchschnittswerte darstellen, genannt.

Als Beispiel für ein Alkanol-Alkoxylat der Formel (III-d) sei die Formel

CH₃-(CH₂)₁₀-O-(-EO-)₆-(-BO-)₂-CH₃ (III-d-1)

in welcher
- EO: für CH₂-CH₂-O- steht,
- BO: für 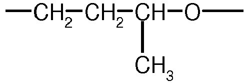 steht und
die Zahlen 10, 6 und 2 Durchschnittswerte darstellen, genannt.

Besonders bevorzugte Alkanol-Alkoxylate der Formel (III-f) sind Verbindungen dieser Formel, in denen
- t: für Zahlen von 9 bis 12 und
- u: für Zahlen von 7 bis 9
steht.

Ganz besonders bevorzugt genannt sei Alkanol-Alkoxylat der Formel (III-f-1)

CH₃-(CH₂)ₜ-CH₂-O-(-CH₂-CH₂-O-)ᵤ-R' (III-f-1)

in welcher
- t: für den Durchschnittswert 10,5 steht und
- u: für den Durchschnittswert 8,4 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-Alkoxylate der angegebenen Formeln sind bekannt und sind teilweise kommerziell erhältlich oder lassen sich nach bekannten Methoden herstellen (vgl. WO 98/35 553, WO 00/35 278 und EP-A 0 681 865).

Als Penetrationsförderer kommen beispielsweise auch Substanzen in Betracht, die die Löslichkeit der Verbindungen der Formel (I) im Spritzbelag fördern. Dazu gehören beispielsweise mineralische oder vegetabile Öle. Als Öle kommen alle üblicherweise in agrochemischen Mitteln einsetzbaren mineralischen oder vegetabilen - gegebenenfalls modifizierte - Öle in Frage. Beispielhaft genannt seien Sonnenblumenöl, Rapsöl, Olivenöl, Rizinusöl, Rüböl, Maiskernöl, Baumwollsaatöl und Sojabohnenöl oder die Ester der genannten Öle. Bevorzugt sind Rapsöl, Sonnenblumenöl und deren Methyl- oder Ethylester.

Die Konzentration an Penetrationsförderer kann in den erfindungsgemäßen Mitteln in einem weiten Bereich variiert werden. Bei einem formulierten Pflanzenschutzmittel liegt sie im allgemeinen bei 1 bis 95 Gew.-*%*, bevorzugt bei 1 bis 55 Gew.-%, besonders bevorzugt bei 15 - 40 Gew.-%. In den anwendungsfertigen Mitteln (Spritzbrühen) liegen die Konzentration im allgemeinen zwischen 0,1 und 10 g/l, bevorzugt zwischen 0,5 und 5 g/l.

Erfindungsgemäß hervorgehobene Kombinationen von Wirkstoff, Salz und Penetrationsförderer sind in folgender Tabelle aufgeführt."Gemäß Test" bedeutet dabei, dass jede Verbindung geeignet ist, die in dem Test für die Kutikelpenetration (Baur et al., 1997, Pesticide Science 51, 131-152) als Penetrationsförderer wirkt.

**Tabelle 1:**

| # | Wirkstoff | Salz | Penetrationsförderer |
|---|---|---|---|
| 1 | I, IA, IB | Ammoniumsulfat | Gemäß Test |
| 2 | I, IA, IB | Ammoniumlaktat | Gemäß Test |
| 3 | I, IA, IB | Ammoniumnitrat | Gemäß Test |
| 4 | I, IA, IB | Ammoniumthiosulfat | Gemäß Test |
| 5 | I, IA, IB | Ammoniumthiocyanat | Gemäß Test |
| 6 | I, IA, IB | Ammoniumcitrat | Gemäß Test |
| 7 | I, IA, IB | Ammoniumoxalat | Gemäß Test |
| 8 | I, IA, IB | Ammoniumformiat | Gemäß Test |
| 9 | I, IA, IB | Ammoniumhydrogenphosphat | Gemäß Test |
| 10 | I, IA, IB | Ammoniumdihydrogenphosphat | Gemäß Test |
| 11 | I, IA, IB | Ammoniumcarbonat | Gemäß Test |
| 12 | I, IA, IB | Ammoniumbenzoat | Gemäß Test |
| 13 | I, IA, IB | Ammoniumsulfit | Gemäß Test |
| 14 | I, IA, IB | Ammoniumbenzoat | Gemäß Test |
| 15 | I, IA, IB | Ammoniumhydrogenoxalat | Gemäß Test |
| 16 | I, IA, IB | Ammoniumhydrogencitrat | Gemäß Test |
| 17 | I, IA, IB | Ammoniumacetat | Gemäß Test |
| 18 | I, IA, IB | Tetramethylammoniumsulfat | Gemäß Test |
| 19 | I, IA, IB | Tetramethylammoniumlaktat | Gemäß Test |
| 20 | I, IA, IB | Tetramethylammoniumnitrat | Gemäß Test |
| 21 | I, IA, IB | Tetramethylammoniumthiosulfat | Gemäß Test |
| 22 | I, IA, IB | Tetramethylammoniumthiocyanat | Gemäß Test |
| 23 | I, IA, IB | Tetramethylammoniumcitrat | Gemäß Test |
| 24 | I, IA, IB | Tetramethylammoniumoxalat | Gemäß Test |
| 25 | I, IA, IB | Tetramethylammoniumformiat | Gemäß Test |
| 26 | I, IA, IB | Tetramethylammoniumhydrogenphosphat | Gemäß Test |
| 27 | I, IA, IB | Tetramethylammoniumdihydrogenphosphat | Gemäß Test |
| 28 | I, IA, IB | Tetraethylammoniumsulfat | Gemäß Test |
| 29 | I, IA, IB | Tetraethylammoniumlaktat | Gemäß Test |
| 30 | I, IA, IB | Tetraethylammoniumnitrat | Gemäß Test |
| 31 | I, IA, IB | Tetraethylammoniumthiosulfat | Gemäß Test |
| 32 | I, IA, IB | Tetraethylammoniumthiocyanat | Gemäß Test |
| 33 | I, IA, IB | Tetraethylammoniumcitrat | Gemäß Test |
| 34 | I, IA, IB | Tetraethylammoniumoxalat | Gemäß Test |
| 35 | I, IA, IB | Tetraethylammoniumformiat | Gemäß Test |
| 36 | I, IA, IB | Tetraethylammoniumhydrogenphosphat | Gemäß Test |
| 37 | I, IA, IB | Tetraethylammoniumdihydrogenphosphat | Gemäß Test |

Erfindungsgemäße Pflanzenschutzmittel können auch weitere Komponenten, beispielsweise Tenside bzw. Dispergierhilfsmittel oder Emulgatoren enthalten.

Als nicht-ionische Tenside bzw. Dispergierhilfsmittel kommen alle üblicherweise in agrochemischen Mitteln einsetzbaren Stoffe dieses Typs in Betracht. Vorzugsweise genannt seien Polyethylenoxidpolypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, sowie Polyoxyalkylenamin-Derivate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Zusatzstoffe, die in den erfindungsgemäßen Formulierungen enthalten sein können, kommen Emulgatoren, schaumhemmende Mittel, Konservierungsmittel, Antioxydantien, Farbstoffe und inerte Füllmaterialien in Betracht.

Bevorzugte Emulgatoren sind ethoxylierte Alkylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxypropoxylate, wobei Sorbitan-Derivate, wie Polyethylenoxid-Sorbitan-Fettsäureester und Sorbitan-Fettsäureester, beispielhaft genannt seien.

Die folgenden Beispiele dienen zur Verdeutlichung der Erfindung und sind in keiner Weise beschränkend auszulegen.

Die Verbindungen der allgemeinen Formel (I) und (I-A) können in den Substituenten A, R¹ bis R⁵ ein oder mehrere Chiralitätszentren aufweisen, und liegen dann als Mischungen von Enantiomeren oder Diastereomeren vor. Die vorliegende Erfindung stellt sowohl die reinen Enantiomere oder Diastereomere als auch deren Mischungen bereit.

Salze der Verbindungen der Formel (I), (I-A) oder (I-B), die sich für die erfindungsgemäße Verwendung eignen, sind insbesondere landwirtschaftlich annehmbare Salze. Diese können auf traditionelle Art und Weise gebildet werden, z.B. dadurch, daß man die Verbindung mit einer Säure des betreffenden Anions umsetzt.

Geeignete landwirtschaftlich nützliche Salze sind insbesondere die Salze von denjenigen Kationen bzw. die Säureadditionssalze von denjenigen Säuren, deren Kationen bzw. Anionen auf die Wirkung der erfindungsgemäßen Verbindungen, die sich für die Bekämpfung von Schadinsekten oder -spinnentieren eignen, keine negativen Auswirkungen ausüben. Geeignete Kationen sind also insbesondere die Ionen der Alkalimetalle, vorzugsweise Lithium, Natrium und Kalium, der Erdalkalimetalle, vorzugsweise Calcium, Magnesium und Barium, sowie der Übergangsmetalle, vorzugsweise Mangan, Kupfer, Zink und Eisen, sowie das Ammoniumion, das gewünschtenfalls ein bis vier C₁-C₄-Alkylsubstituenten und/oder einen Phenyl- oder Benzylsubstituenten tragen kann, vorzugsweise Diisopropylammonium, Tetramethylammonium, Tetrabutylammonium, Trimethylbenzylammonium, weiterhin Phosphoniumionen, Sulfoniumionen, vorzugsweise Tri(C₁-C₄-alkyl)sulfonium und Sulfoxoniumionen, vorzugsweise Tri(C₁-C₄-alkyl)sulfoxonium.

Anionen von nützlichen Säureadditionssalzen sind in erster Linie Chlorid, Bromid, Fluorid, Hyrogensulfat, Sulfat, Dihydrogenphosphat, Hydrogenphosphat, Phosphat, Nitrat, Hydrogencarbonat, Carbonat, Hexafluorsilicat, Hexafluorphosphat, Benzoat und die Anionen der C₁-C₄-Alkansäuren, vorzugsweise Formiat, Acetat, Propionat und Butyrat. Diese können dadurch gebildet werden, daß man die Verbindungen der Formeln Ia und Ib mit einer Säure des entsprechenden Anions, vorzugsweise der Salzsäure, der Bromwasserstoffsäure, der Schwefelsäure, der Phosphorsäure oder der Salpetersäure, umsetzt.

Die in den oben genannten Definitionen der Variablen genannten organischen Reste, wie der Begriff Halogen, sind Sammelbegriffe für einzelne Aufzählungen von einzelnen Gruppenmitgliedern. Das Präfix "Cₙ-Cₘ" gibt jeweils die mögliche Anzahl Kohlenstoffatome in der Gruppe an.

Der Begriff Halogen bedeutet jeweils Fluor, Brom, Chlor oder Iod.

Beispiele für weitere Bedeutungen sind:

Der Begriff "C₁-C₄-Alkyl" im vorliegenden Zusammenhang sowie die Alkylreste von Alkylamino und Dialkylamino bedeuten einen gesättigten geradkettigen oder verzweigten Kohlenwasserstoffrest mit 1 bis 4 Kohlenstoffatomen, also zum Beispiel Methyl, Ethyl, Propyl, 1-Methylethyl, Butyl, 1-Methylpropyl, 2-Methylpropyl oder 1,1-Dimethylethyl.

Der Begriff "C₁-C₆-Alkyl" bedeutet im vorliegenden Zusammenhang einen gesättigten geradkettigen oder verzweigten Kohlenwasserstoffrest mit 1 bis 6 Kohlenstoffatomen, also zum Beispiel einen der Reste, die unter C₁-C₄-Alkyl erwähnt wurden, sowie n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl.

Der Begriff "C₁-C₄-Halogenalkyl" bedeutet im vorliegenden Zusammenhang einen (wie oben erwähnten) geradkettigen oder verzweigten gesättigten Alkylrest mit 1 bis 4 Kohlenstoffatomen, wobei einige oder alle der Wasserstoffatome in diesen Resten durch Fluor, Chlor, Brom und/oder Iod ersetzt sein können, also zum Beispiel Chlormethyl, Dichlormethyl, Trichlormethyl, Fluormethyl, Difluormethyl, Trifluormethyl, Chlorfluormethyl, Dichlorfluormethyl, Chlordifluormethyl, 2-Fluorethyl, 2-Chlorethyl, 2-Bromethyl, 2-Iodethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl, 2-Fluorpropyl, 3-Fluorpropyl, 2,2-Difluorpropyl, 2,3-Difluorpropyl, 2-Chlorpropyl, 3-Chlorpropyl, 2,3-Dichlorpropyl, 2-Brompropyl, 3-Brompropyl, 3,3,3-Trifluorpropyl, 3,3,3-Trichlorpropyl, 2,2,3,3,3-Pentafluorpropyl, Heptafluorpropyl, 1-(Fluormethyl)-2-fluorethyl, 1-(Chlormethyl)-2-chlorethyl, 1-(Brommethyl)-2-bromethyl, 4-Fluorbutyl, 4-Chlorbutyl, 4-Brombutyl oder Nonafluorbutyl.

Der Begriff "C₁-C₂-Fluoralkyl" bedeutet im vorliegenden Zusammenhang einen C₁-C₂-Alkylrest, der 1, 2, 3, 4 oder 5 Fluoratome trägt, zum Beispiel Difluormethyl, Trifluormethyl, 1-Fluorethyl, 2-Fluorethyl, 2,2-Difluorethyl, 2,2,2-Trifluorethyl, 1,1,2,2-Tetrafluorethyl oder Pentafluorethyl.

Der Begriff "C₁-C₄-Alkoxy" bedeutet im vorliegenden Zusammenhang einen (wie oben erwähnten) geradkettigen oder verzweigten gesättigten Alkylrest mit 1 bis 4 Kohlenstoffatomen, der über ein Sauerstoffatom gebunden ist, also zum Beispiel Methoxy, Ethoxy, n-Propoxy, 1-Methylethoxy, n-Butoxy, 1-Methylpropoxy, 2-Methylpropoxy oder 1,1-Dimethylethoxy.

Der Begriff "C₁-C₄-Halogenalkoxy" bedeutet im vorliegenden Zusammenhang einen wie oben erwähnten C₁-C₄-Alkoxyrest, der teilweise oder ganz durch Fluor, Chlor, Brom und/oder Iod substituiert ist, also zum Beispiel Chlormethoxy, Dichlormethoxy, Trichlormethoxy, Fluormethoxy, Difluormethoxy, Trifluormethoxy, Chlorfluormethoxy, Dichlorfluormethoxy, Chlordifluormethoxy, 2-Fluorethoxy, 2-Chlorethoxy, 2-Bromethoxy, 2-Iodethoxy, 2,2-Difluorethoxy, 2,2,2-Trifluorethoxy, 2-Chlor-2-fluorethoxy, 2-Chlor-2,2-difluorethoxy, 2,2-Dichlor-2-fluorethoxy, 2,2,2-Trichlorethoxy, Pentafluorethoxy, 2-Fluorpropoxy, 3-Fluorpropoxy, 2,2-Difluorpropoxy, 2,3-Difluorpropoxy, 2-Chlorpropoxy, 3-Chlorpropoxy, 2,3-Dichlorpropoxy, 2-Brompropoxy, 3-Brompropoxy, 3,3,3-Trifluorpropoxy, 3,3,3-Trichlorpropoxy, 2,2,3,3,3-Pentafluorpropoxy, Heptafluorpropoxy, 1-(Fluormethyl)-2-fluorethoxy, 1-(Chlormethyl)-2-chlorethoxy, 1-(Brommethyl)-2-bromethoxy, 4-Fluorbutoxy, 4-Chlorbutoxy, 4-Brombutoxy oder Nonafluorbutoxy.

Der Begriff "C₁-C₄-Alkylthio(C₁-C₄-Alkylsulfanyl: C₁-C₄-Alkyl-S-)" bedeutet im vorliegenden Zusammenhang einen geradkettigen oder verzweigten gesättigten Alkylrest mit 1 bis 4 Kohlenstoffatomen (wie oben erwähnt), der über ein Schwefelatom gebunden ist, also zum Beispiel Methylthio, Ethylthio, n-Propylthio, 1-Methylethylthio, Butylthio, 1-Methylpropylthio, 2-Methylpropylthio oder 1,1-Dimethylethylthio.

Der Begriff "C₁-C₄-Alkylsulfinyl" (C₁-C₄-Alkyl-S(=O)-) bedeutet im vorliegenden Zusammenhang einen (wie oben erwähnten) geradkettigen oder verzweigten gesättigten Kohlenwasserstoffrest mit 1 bis 4 Kohlenstoffatomen, der über das Schwefelatom der Sulfinylgruppe an einer beliebigen Bindung im Alkylrest gebunden ist, also zum Beispiel SO-CH₃, SO-C₂H₅, n-Propylsulfinyl, 1- Methylethylsulfinyl, n-Butylsulfinyl, 1-Methylpropylsulfinyl, 2-Methylpropylsulfinyl, 1,1-Dimethyl]ethylsulfinyl, n-Pentylsulfinyl, 1-Methylbutylsulfinyl, 2-Methylbutylsulfinyl, 3-Methylbutylsulfinyl, 1,1-Dimethylpropylsulfinyl, 1,2-Dimethylpropylsulfinyl, 2,2-Dimethylpropylsulfinyl oder 1-Ethylpropylsulfinyl.

Der Begriff "C₁-C₄-Alkylsulfonyl" (C₁-C₄-Alkyl-S(=O)₂-) bedeutet im vorliegenden Zusammenhang einen (wie oben erwähnten) geradkettigen oder verzweigten gesättigten Alkylrest mit 1 bis 4 Kohlenstoffatomen, der über das Schwefelatom der Sulfonylgruppe an einer beliebigen Bindung im Alkylrest gebunden ist, also zum Beispiel SO₂-CH₃, SO₂-C₂H₅, n-Propylsulfonyl, SO₂-CH(CH₃)₂, n-Butylsulfonyl, 1-Methylpropylsulfonyl, 2-Methylpropylsulfonyl oder SO₂-C(CH₃)₃.

Der Begriff "C₁-C₄-Halogenalkylthio" bedeutet im vorliegenden Zusammenhang einen wie oben erwähnten C₁-C₄-Alkylthiorest, der teilweise oder ganz durch Fluor, Chlor, Brom und/oder Iod substituiert ist, also zum Beispiel Fluormethylthio, Difluormethylthio, Trifluormethylthio, Chlordifluormethylthio, Bromdifluormethylthio, 2-Fluorethylthio, 2-Chlorethylthio, 2-Bromethylthio, 2-Iodethylthio, 2,2-Difluorethylthio, 2,2,2-Trifluorethylthio, 2,2,2-Trichlorethylthio, 2-Chlor-2-fluorethylthio, 2-Chlor-2,2-difluorethylthio, 2,2-Dichlor-2-fluorethylthio, Pentafluorethylthio, 2-Fluorpropylthio, 3-Fluorpropylthio, 2-Chlorpropylthio, 3-Chlorpropylthio, 2-Brompropylthio, 3-Brompropylthio, 2,2-Difluorpropylthio, 2,3-Difluorpropylthio, 2,3-Dichlorpropylthio, 3,3,3-Trifluorpropylthio, 3,3,3-Trichlorpropylthio, 2,2,3,3,3-Pentafluorpropylthio, Heptafluorpropylthio, 1-(Fluormethyl)-2-fluorethylthio, 1-(Chlormethyl)-2-chlorethylthio, 1-(Brommethyl)-2-bromethylthio, 4-Fluorbutylthio, 4-Chlorbutylthio, 4-Brombutylthio oder Nonafluorbutylthio.

Der Begriff "C₁-C₄-Alkoxycarbonyl" bedeutet im vorliegenden Zusammenhang einen (wie oben erwähnten) geradkettigen oder verzweigten Alkoxyrest mit 1 bis 4 Kohlenstoffatomen, der über das Kohlenstoffatom der Carbonylgruppe gebunden ist, also zum Beispiel Methoxycarbonyl, Ethoxycarbonyl, n-Propoxycarbonyl, 1-Methylethoxycarbonyl, n-Butoxycarbonyl, 1-Methylpropoxycarbonyl, 2-Methylpropoxycarbonyl oder 1,1-Dimethylethoxycarbonyl.

Der Begriff "C₁-C₄-Alkylcarbonyl" bedeutet im vorliegenden Zusammenhang einen (wie oben erwähnten) geradkettigen oder verzweigten Alkylrest mit 1 bis 4 Kohlenstoffatomen, der über das Kohlenstoffatom der Carbonylgruppe gebunden ist, also zum Beispiel Methylcarbonyl, Ethylcarbonyl, n-Propylcarbonyl, 1-Methylethylcarbonyl, n-Butylcarbonyl, 1-Methylpropylcarbonyl, 2-Methylpropylcarbonyl oder 1,1-Dimethylethylcarbonyl.

Der Begriff "(C₁-C₄-Alkylamino)carbonyl" bedeutet im vorliegenden Zusammenhang zum Beispiel Methylaminocarbonyl, Ethylaminocarbonyl, Propylaminocarbonyl, 1-Methylethylaminocarbonyl, Butylaminocarbonyl, 1-Methylpropylaminocarbonyl, 2-Methylpropylaminocarbonyl oder 1,1-Dimethylethylaminocarbonyl.

Der Begriff "Di-(C₁-C₄-alkyl)aminocarbonyl" bedeutet im vorliegenden Zusammenhang zum Beispiel N,N-Dimethylaminocarbonyl, N,N-Diethylaminocarbonyl, N,N-Di-(1-methylethyl)aminocarbonyl, N,N-Dipropylaminocarbonyl, N,N-Butylaminocarbonyl, N,N-Di-(1-methylpropyl)aminocarbonyl, N,N-Di(2-methylpropyl)aminocarbonyl, N,N-Di-(1,1-dimethylethyl)aminocarbonyl, N-Ethyl-N-methylaminocarbonyl, N-Methyl-N-propylaminocarbonyl, N-Methyl-N-(1-methylethyl)aminocarbonyl, N-Butyl-N-methylaminocarbonyl, N-Methyl-N-(1-methylpropyl)aminocarbonyl, N-Methyl-N-(2-methylpropyl)aminocarbonyl, N-(1,1-Dimethylethyl)-N-methylaminocarbonyl, N-Ethyl-N-propylaminocarbonyl, N-Ethyl-N-(1-methylethyl)aminocarbonyl, N-Butyl-N-ethylaminocarbonyl, N-Ethyl-N-(1-methylpropyl)aminocarbonyl, N-Ethyl-N-(2-methylpropyl)aminocarbonyl, N-Ethyl-N-(1,1-dimethylethyl)aminocarbonyl, N-(1-Methylethyl)-N-propylaminocarbonyl, N-Butyl-N-propylaminocarbonyl, N-(1-Methylpropyl)-N-propylaminocarbonyl, N-(2-Methylpropyl)-N-propylaminocarbonyl, N-(1,1-Dimethylethyl)-N-propylaminocarbonyl, N-Butyl-N-(1-methylethyl)aminocarbonyl, N-(1-Methylethyl)-N-(1-methylpropyl)aminocarbonyl, N-(1-Methylethyl)-N-(2-methylpropyl)aminocarbonyl, N-(1,1-Dimethylethyl)-N-(1-methylethyl)aminocarbonyl, N-Butyl-N-(1-methylpropyl)aminocarbonyl, N-Butyl-N-(2-methylpropyl)aminocarbonyl, N-Butyl-N-(1,1-dimethylethyl)aminocarbonyl, N-(1-Methylpropyl)-N-(2-methylpropyl)aminocarbonyl, N-(1,1-Dimethylethyl)-N-(1-methylpropyl)-aminocarbonyl oder N-(1,1-Dimethylethyl)-N-(2-methylpropyl)aminocarbonyl.

Der Begriff "C₂-C₆-Alkenyl" bedeutet im vorliegenden Zusammenhang einen geradkettigen oder verzweigten einfach ungesättigten Kohlenwasserstoffrest mit 2 bis 6 Kohlenstoffatomen und einer Doppelbindung in einer beliebigen Stellung, also zum Beispiel Ethenyl, 1-Propenyl, 2-Propenyl, 1-Methyl-ethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl und 1-Ethyl-2-methyl-2-propenyl.

Der Begriff "C₂-C₆-Alkinyl" bedeutet im vorliegenden Zusammenhang einen geradkettigen oder verzweigten aliphatischen Kohlenwasserstoffrest, der eine C-C - Dreifachbindung enthält und 2 bis 6 Kohlenstoffatome aufweist: zum Beispiel Ethynyl, prop-1-in-1-yl, prop-2-in-1-yl, n-but-1-in-1-yl, n-but-1-in-3-yl, n-but-1-in-4-yl, n-but-2-in-1-yl, n-pent-1-in-1-yl, n-pent-1-in-3-yl, n-pent-1-in-4-yl, n-pent-1-in-5-yl, n-pent-2-in-1-yl, n-pent-2-in-4-yl, n-pent-2-in-5-yl, 3-methylbut-1-in-3-yl, 3-methylbut-1-in-4-yl, n-hex-1-in-1-yl, n-hex-1-in-3-yl, n-hex-1-in-4-yl, n-hex-1-in-5-yl, n-hex-1-in-6-yl, n-hex-2-in-1-yl, n-hex-2-in-4-yl, n-hex-2-in-5-yl, n-hex-2-in-6-yl, n-hex-3-in-1-yl, n-hex-3-in-2-yl, 3-methylpent-1-in-1-yl, 3-methylpent-1-in-3-yl, 3-methylpent-1-in-4-yl, 3-methylpent-1-in-5-yl, 4-methylpent-1-in-1-yl, 4-methylpent-2-in-4-yl oder 4-methylpent-2-in-5-yl und dergleichen.

Der Begriff "C₃-C₈-Cycloalkyl" bedeutet im vorliegenden Zusammenhang einen einkernigen Kohlenwasserstoffrest mit 3 bis 8 Kohlenstoffatomen, zum Beispiel Cyclopropyl, Cyclobutyl, Cyclopentyl, Cyclohexyl, Cycloheptyl oder Cyclooctyl.

Unter den 2-Cyanobenzolsulfonamidverbindungen der allgemeinen Formel (I), (I-A) und (I-B) sind diejenigen bevorzugt, in denen die Variablen A, R¹ und R² unabhängig voneinander, jedoch insbesondere in Kombination, die im folgenden angeführten Bedeutungen aufweisen:
- A: bedeutet Wasserstoff, C1-C4-Alkyl, insbesondere Methyl oder Ethyl
- R¹: bedeutet Wasserstoff, Fluor, Chlor, Brom, C₁-C₂-Alkyl, insbesondere Methyl, Trifluormethyl oder C₁-C₂-Alkoxy, insbesondere Methoxy;
- R²: bedeutet Wasserstoff oder einen geradkettigen, cyclischen oder verzweigtkettigen Kohlenwasserstoffrest mit 1 bis 4 Kohlenstoffatomen, z.B. C₁-C₄-Alkyl, insbesondere Methyl, Ethyl, n-Propyl, 1-Methylethyl, Cyclopropyl, C₁-C₄-Alkoxy-C₁-C₄-alkyl, insbesondere 2-Methoxyethyl, C₁-C₄-Alkylthio-C₁-C₄-alkyl, insbesondere 2-Methylthioethyl oder C₂-C₄-Alkinyl, insbesondere prop-2-in-1-yl (Propargyl). Am stärksten bevorzugt werden Verbindungen I, in denen A für Wasserstoff steht und R² aus der Reihe Methyl, Ethyl, 1-Methylethyl und prop-2-in-1-yl stammt.

Ebenfalls bevorzugt sind diejenigen 2-Cyanobenzolsulfonamidverbindungen der allgemeinen Formel (I), (I-A) und (I-B) in denen R¹ C₁-C₄-Halogenalkoxy, speziell C₁-Halogenalkoxy, insbesondere Trifluormethoxy, Difluormethoxy oder Chlordifluormethoxy, bedeutet. In diesem Verbindungen weist A die oben angegebenen Bedeutungen, vorzugsweise Wasserstoff, Methyl oder Ethyl und R² die oben angegebenen Bedeutungen auf, vorzugsweise Wasserstoff oder einen geradkettigen, cyclischen oder verzweigtkettigen Kohlenwasserstoffrest mit 1 bis 4 Kohlenstoffatomen, z.B. C₁-C₄-Alkyl, speziell Methyl, Ethyl, n-Propyl, 1-Methylethyl, Cyclopropyl, C₁-C₄-Alkoxy-C₁-C₄-alkyl, speziell 2-Methoxyethyl, C₁-C₄-Alkylthio-C₁-C₄-alkyl, speziell 2-Methylthioethyl oder C₂-C₄-Alkinyl, speziell prop-2-in-1-yl (Propargyl). Am stärksten bevorzugt sind Verbindungen der Formel (I) und (I-A), in denen A für Wasserstoff und R² aus der Reihe Methyl, Ethyl, 1-Methylethyl und prop-2-in-1-yl stammt.

Eine bevorzugte Ausführungsform der vorliegenden Erfindung betrifft 2-Cyanobenzolsulfonamidverbindungen der allgemeinen Formel (I), (I-A) und (I-B) in der die Variablen A, R¹ und R² die oben erwähnten Bedeutungen aufweisen, insbesondere diejenigen Bedeutungen, die als bevorzugt angeführt sind, und sich mindestens einer der Reste R³, R⁴ oder R⁵ von Wasserstoff unterscheidet, vorzugsweise bedeuten einer oder zwei der Reste R³, R⁴ oder R⁵ Wasserstoff. Unter diesen Verbindungen sind diejenigen Verbindungen bevorzugt, in denen sich R³ von Wasserstoff unterscheidet und vorzugsweise Halogen, insbesondere Chlor oder Fluor, bedeutet, und die anderen Reste R⁴ und R⁵ Wasserstoff bedeuten.

Eine weitere bevorzugte Ausführungform der vorliegenden Erfindung betrifft 2-Cyanobenzolsulfonamidverbindungen der allgemeinen Formel (I), (I-A) und (I-B), in der die Variablen A, R¹ und R² die oben erwähnten Bedeutungen aufweisen, insbesondere diejenigen Bedeutungen, die als bevorzugt angeführt werden, und jeder der Reste R³, R⁴ und R⁵ Wasserstoff bedeutet.

Zu Beispielen für bevorzugte erfindungsgemäße Verbindungen der Formel (I), 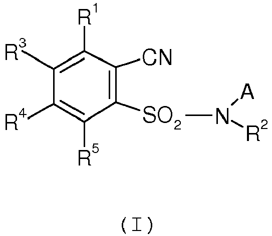 welche gegebenenfalls in deren isomeren Formeln (I-A) und (I-B) vorliegen können, zählen diejenigen Verbindungen, die in den folgenden Tabellen A1 bis A16 angeführt sind, wobei A, R³, R⁴, R⁵ wie in den Tabellen definiert sind und R¹ und R² in den Reihen der Tabelle A angegeben sind:
- Tabelle A1:: Verbindungen der Formel I, wobei jeder der Reste A, R³, R⁴ und R⁵ Wasserstoff bedeutet und R¹ und R² wie in einer Reihe in Tabelle A definiert sind.
- Tabelle A2:: Verbindungen der Formel I, wobei R³ Chlor bedeutet, A, R⁴ und R⁵ Wasserstoff bedeuten und R¹ und R² wie in einer Reihe in Tabelle A definiert sind.
- Tabelle A3:: Verbindungen der Formel I, wobei R³ Fluor bedeutet, A, R⁴ und R⁵ Wasserstoff bedeuten und R¹ und R² wie in einer Reihe in Tabelle A definiert sind.
- Tabelle A4:: Verbindungen der Formel I, wobei R³ Brom bedeutet, A, R⁴ und R⁵ Wasserstoff bedeuten und R¹ und R² wie in einer Reihe in Tabelle A definiert sind.
- Tabelle A5:: Verbindungen der Formel I, wobei R³ Iod bedeutet, A, R⁴ und R⁵ Wasserstoff bedeuten und R¹ und R² wie in einer Reihe in Tabelle A definiert sind.
- Tabelle A6:: Verbindungen der Formel I, wobei R³ CH₃ bedeutet, A, R⁴ und R⁵ Wasserstoff bedeuten und R¹ und R² wie in einer Reihe in Tabelle A definiert sind.
- Tabelle A7:: Verbindungen der Formel I, wobei R⁴ Chlor bedeutet, A, R³ und R⁵ Wasserstoff bedeuten und R¹ und R² wie in einer Reihe in Tabelle A definiert sind.
- Tabelle A8:: Verbindungen der Formel I, wobei R⁴ Fluor bedeutet, A, R³ und R⁵ Wasserstoff bedeuten und R¹ und R² wie in einer Reihe in Tabelle A definiert sind.
- Tabelle A9:: Verbindungen der Formel I, wobei R⁴ Brom bedeutet, A, R³ und R⁵ Wasserstoff bedeuten und R¹ und R² wie in einer Reihe in Tabelle A definiert sind.
- Tabelle A10:: Verbindungen der Formel I, wobei R⁴ Iod bedeutet, A, R³ und R⁵ Wasserstoff bedeuten und R¹ und R² wie in einer Reihe in Tabelle A definiert sind.
- Tabelle A11:: Verbindungen der Formel I, wobei R⁴ CH₃ bedeutet, A, R³ und R⁵ Wasserstoff bedeuten und R¹ und R² wie in einer Reihe in Tabelle A definiert sind.
- Tabelle A12:: Verbindungen der Formel I, wobei R⁵ Chlor bedeutet, A, R³ und R⁴ Wasserstoff bedeuten und R¹ und R² wie in einer Reihe in Tabelle A definiert sind.
- Tabelle A13:: Verbindungen der Formel I, wobei R⁵ Fluor bedeutet, A, R³ und R⁴ Wasserstoff bedeuten und R¹ und R² wie in einer Reihe in Tabelle A definiert sind.
- Tabelle A14:: Verbindungen der Formel I, wobei R⁵ Brom bedeutet, A, R³ und R⁴ Wasserstoff bedeuten und R¹ und R² wie in einer Reihe in Tabelle A definiert sind.
- Tabelle A15:: Verbindungen der Formel I, wobei R⁵ Iod bedeutet, A, R³ und R⁴ Wasserstoff bedeuten und R¹ und R² wie in einer Reihe in Tabelle A definiert sind.
- Tabelle A16:: Verbindungen der Formel I, wobei R⁵ CH₃ bedeutet, A, R³ und R⁴ Wasserstoff bedeuten und R¹ und R² wie in einer Reihe in Tabelle A definiert sind.

**Tabelle A:**

| | **R**¹ | **R**² |
|---|---|---|
| 1. | CH₃ | H |
| 2. | CH₃ | CH₃ |
| 3. | CH₃ | CH₃CH₂- |
| 4. | CH₃ | (CH₃)₂CH- |
| 5. | CH₃ | CH₃CH₂CH₂- |
| 6. | CH₃ | n-C₄H₉ |
| 7. | CH₃ | (CH₃)₃C- |
| 8. | CH₃ | (CH₃)₂CHCH₂- |
| 9. | CH₃ | n-C₅H₁₁ |
| 10. | CH₃ | (CH₃)₂CH-CH₂-CH₂ |
| 11. | CH₃ | (C₂H₅)₂-CH- |
| 12. | CH₃ | (CH₃)₃C-CH₂- |
| 13. | CH₃ | (CH₃)₃C-CH₂-CH₂- |
| 14. | CH₃ | C₂H₅CH(CH₃)-CH₂- |
| 15. | CH₃ | CH₃-CH₂-C(CH₃)₂- |
| 16. | CH₃ | (CH₃)₂CH-CH(CH₃)- |
| 17. | CH₃ | (CH₃)₃C-CH(CH₃)- |
| 18. | CH₃ | (CH₃)₂CH-CH₂-CH(CH₃)- |
| 19. | CH₃ | CH₃-CH₂-C(CH₃)(C₂H₅)- |
| 20. | CH₃ | CH₃-CH₂-CH₂-C(CH₃)₂- |
| 21. | CH₃ | C₂H₅-CH₂-CH(CH₃)-CH₂- |
| 22. | CH₃ | cyclopropyl |
| 23. | CH₃ | cyclopropyl-CH₂- |
| 24. | CH₃ | cyclopropyl-CH(CH₃)- |
| 25. | CH₃ | cyclobutyl |
| 26. | CH₃ | cyclopentyl |
| 27. | CH₃ | cyclohexyl |
| 28. | CH₃ | HC≡C-CH₂- |
| 29. | CH₃ | HC≡C-CH(CH₃)- |
| 30. | CH₃ | HC≡C-C(CH₃)₂- |
| 31. | CH₃ | HC≡C-C(CH₃)(C₂H₅)- |
| 32. | CH₃ | HC≡C-C(CH₃)(C₃H₇)- |
| 33. | CH₃ | CH₂=CH-CH₂- |
| 34. | CH₃ | H₂C=CH-CH(CH₃)- |
| 35. | CH₃ | H₂C=CH-C(CH₃)₂- |
| 36. | CH₃ | H₂C=CH-C(C₂H₅)(CH₃)- |
| 37. | CH₃ | C₆H₅-CH₂- |
| 38. | CH₃ | 4-(CH₃)₃C-C₆H₄-CH₂- |
| 39. | CH₃ | C₆H₅-CH₂- |
| 40. | CH₃ | 4-(CH₃)₃C-C₆H₄-CH₂- |
| 41. | CH₃ | 4-Cl-C₆H₄-CH₂- |
| 42. | CH₃ | 3-(CH₃O)-C₆H₄-CH₂- |
| 43. | CH₃ | 4-(CH₃O)-C₆H₄-CH₂- |
| 44. | CH₃ | 2-(CH₃O)-C₆H₄-CH₂- |
| 45. | CH₃ | 3-Cl-C₆H₄-CH₂- |
| 46. | CH₃ | 2-Cl-C₆H₄-CH₂- |
| 47. | CH₃ | 4-(F₃C)-C₆H₄-CH₂- |
| 48. | CH₃ | NC-CH₂- |
| 49. | CH₃ | NC-CH₂-CH₂- |
| 50. | CH₃ | NC-CH₂CH(CH₃)- |
| 51. | CH₃ | NC-CH₂C(CH₃)₂- |
| 52. | CH₃ | NC-CH₂-CH₂-CH₂- |
| 53. | CH₃ | FH₂C-CH₂- |
| 54. | CH₃ | ClH₂C-CH₂- |
| 55. | CH₃ | BrH₂C-CH₂- |
| 56. | CH₃ | FH₂C-CH(CH₃)- |
| 57. | CH₃ | ClH₂C-CH(CH₃)- |
| 58. | CH₃ | BrH₂C-CH(CH₃)- |
| 59. | CH₃ | F₂HC⁻CH₂- |
| 60. | CH₃ | F₃C-CH₂- |
| 61. | CH₃ | FH₂C-CH₂-CH₂- |
| 62. | CH₃ | ClH₂C-CH₂-CH₂- |
| 63. | CH₃ | BrH₂C-CH₂-CH₂- |
| 64. | CH₃ | F₂HC-CH₂-CH₂- |
| 65. | CH₃ | F₃C-CH₂-CH₂- |
| 66. | CH₃ | CH₃-O-CH₂-CH₂- |
| 67. | CH₃ | CH₃-S-CH₂-CH₂- |
| 68. | CH₃ | CH₃-SO₂-CH₂-CH₂- |
| 69. | CH₃ | C₂H₅-O-CH₂-CH₂- |
| 70. | CH₃ | (CH₃)₂CH-O-CH₂-CH₂- |
| 71. | CH₃ | C₂H₅-S-CH₂-CH₂- |
| 72. | CH₃ | C₂H₅-SO₂-CH₂-CH₂- |
| 73. | CH₃ | (CH₃)₂N-CH₂-CH₂- |
| 74. | CH₃ | (C₂H₅)₂N-CH₂-CH₂- |
| 75. | CH₃ | [(CH₃)₂CH]₂N-CH₂-CH₂- |
| 76. | CH₃ | CH₃-O-CH₂-CH(CH₃)- |
| 77. | CH₃ | CH₃-S-CH₂-CH(CH₃)- |
| 78. | CH₃ | CH₃-SO₂-CH₂-CH(CH₃)- |
| 79. | CH₃ | C₂H₅-O-CH₂-CH(CH₃)- |
| 80. | CH₃ | C₂H₅-S-CH₂-CH(CH₃)- |
| 81. | CH₃ | C₂H₅-SO₂-CH₂-CH(CH₃)- |
| 82. | CH₃ | (CH₃)₂N-CH₂-CH(CH₃)- |
| 83. | CH₃ | (C₂H₅)₂N-CH₂-CH(CH₃)- |
| 84. | CH₃ | [(CH₃)₂CH]₂N-CH₂-CH(CH₃)- |
| 85. | CH₃ | CH₃-O-CH(CH₃)-CH₂- |
| 86. | CH₃ | CH₃-S-CH(CH₃)-CH₂- |
| 87. | CH₃ | CH₃-SO₂-CH(CH₃)-CH₂- |
| 88. | CH₃ | C₂H₅-O-CH(CH₃)-CH₂- |
| 89. | CH₃ | C₂H₅-S-CH(CH₃)-CH₂- |
| 90. | CH₃ | C₂H₅-SO₂-CH(CH₃)-CH₂- |
| 91. | CH₃ | (CH₃)₂N-CH(CH₃)-CH₂- |
| 92. | CH₃ | (C₂H₅)₂N-CH(CH₃)-CH₂- |
| 93. | CH₃ | [(CH₃)₂CH]₂N-CH(CH₃)-CH₂- |
| 94. | CH₃ | CH₃-O-CH₂-CH₂-CH₂- |
| 95. | CH₃ | CH₃-S-CH₂-CH₂-CH₂- |
| 96. | CH₃ | CH₃-SO₂-CH₂-CH₂-CH₂- |
| 97. | CH₃ | C₂H₅-O-CH₂-CH₂-CH₂- |
| 98. | CH₃ | C₂H₅-S-CH₂-CH₂-CH₂- |
| 99. | CH₃ | C₂H₅-SO₂-CH₂-CH₂-CH₂- |
| 100. | CH₃ | (CH₃)₂N-CH₂-CH₂CH₂- |
| 101. | CH₃ | (C₂H₅)₂N-CH₂-CH₂-CH₂- |
| 102. | CH₃ | CH₃-O-CH₂-C(CH₃)₂- |
| 103. | CH₃ | CH₃-S-CH₂-C(CH₃)₂- |
| 104. | CH₃ | CH₃-SO₂-CH₂-C(CH₃)₂- |
| 105. | CH₃ | C₂H₅-O-CH₂-C(CH₃)₂- |
| 106. | CH₃ | C₂H₅-S-CH₂-C(CH₃)₂- |
| 107. | CH₃ | C₂H₅-SO₂-CH₂-C(CH₃)₂- |
| 108. | CH₃ | (CH₃)₂N-CH₂-C(CH₃)₂- |
| 109. | CH₃ | (C₂H₅)₂N-CH₂-C(CH₃)₂- |
| 110. | CH₃ | [(CH₃)₂CH]₂N-CH₂-C(CH₃)₂- |
| 111. | CH₃ | Cl-CH₂-C≡C-CH₂- |
| 112. | CH₃ | CH₃-0-C(O)-CH₂- |
| 113. | CH₃ | C₂H₅-O-C(O)-CH₂- |
| 114. | CH₃ | CH₃-O-C(O)-CH(CH₃) - |
| 115. | CH₃ | C₂H₅-O-C(O)-CH(CH₃)- |
| 116. | CH₃ | (CH₃O)₂CH-CH₂- |
| 117. | CH₃ | (C₂H₅O)₂-CH-CH₂- |
| 118. | C₂H₅ | H |
| 119. | C₂H₅ | CH₃ |
| 120. | C₂H₅ | CH₃CH₂- |
| 121. | C₂H₅ | (CH₃)₂CH- |
| 122. | C₂H₅ | CH₃CH₂CH₂- |
| 123. | C₂H₅ | n-C₄H₉ |
| 124. | C₂H₅ | (CH₃)₃ C- |
| 125. | C₂H₅ | (CH₃)₂CH-CH₂- |
| 126. | C₂H₅ | n-C₅H₁₁ |
| 127. | C₂H₅ | (CH₃)₂CH-CH₂CH₂- |
| 128. | C₂H₅ | (C₂H₅)₂-CH- |
| 129. | C₂H₅ | (CH₃)₃C-CH₂- |
| 130. | C₂H₅ | (CH₃)₃C-CH₂-CH₂- |
| 131. | C₂H₅ | C₂H₅-CH(CH₃)-CH₂- |
| 132. | C₂H₅ | CH₃-CH₂-C(CH₃)₂- |
| 133. | C₂H₅ | (CH₃)₂CH-CH(CH₃)- |
| 134. | C₂H₅ | (CH₃)₃C-CH(CH₃) - |
| 135. | C₂H₅ | (CH₃)₂CH-CH₂-CH(CH₃) - |
| 136. | C₂H₅ | CH₃-CH₂-C(CH₃)(C₂H₅)- |
| 137. | C₂H₅ | CH₃-CH₂-CH₂-C(CH₃)₂- |
| 138. | C₂H₅ | C₂H₅-CH₂-CH(CH₃)-CH₂- |
| 139. | C₂H₅ | cyclopropyl |
| 140. | C₂H₅ | cyclopropyl-CH₂- |
| 141. | C₂H₅ | cyclopropyl-CH(CH₃)- |
| 142. | C₂H₅ | cyclobutyl |
| 143. | C₂H₅ | cyclopentyl |
| 144. | C₂H₅ | cyclohexyl |
| 145. | C₂H₅ | HC≡C-CH₂- |
| 146. | C₂H₅ | HC≡C-CH(CH₃)- |
| 147. | C₂H₅ | HC≡C-C(CH₃)₂- |
| 148. | C₂H₅ | HC≡C-C(CH₃)(C₂H₅)- |
| 149. | C₂H₅ | HC≡C-C(CH₃)(C₃H₇) - |
| 150. | C₂H₅ | CH₂≡CH-CH₂- |
| 151. | C₂H₅ | H₂C≡CH-CH(CH₃) - |
| 152. | C₂H₅ | H₂C≡CH-C(CH₃)₂- |
| 153. | C₂H₅ | H₂C≡CH-C(C₂H₅)(CH₃) - |
| 154. | C₂H₅ | C₆H₅-CH₂- |
| 155. | C₂H₅ | 4-(CH₃)₃C-C₆H₄-CH₂- |
| 156. | C₂H₅ | C₆H₅-CH₂- |
| 157. | C₂H₅ | 4-(CH₃)₃C-C₆H₄-CH₂- |
| 158. | C₂H₅ | 4-Cl-C₆H₄-CH₂- |
| 159. | C₂H₅ | 3-(CH₃O)-C₆H₄-CH₂- |
| 160. | C₂H₅ | 4-(CH₃O)-C₆H₄-CH₂- |
| 161. | C₂H₅ | 2-(CH₃O)-C₆H₄-CH₂- |
| 162. | C₂H₅ | 3-Cl-C₆H₄-CH₂- |
| 163. | C₂H₅ | 2-Cl-C₆H₄-CH₂- |
| 164. | C₂H₅ | 4-(F₃C)-C₆H₄-CH₂- |
| 165. | C₂H₅ | NC-CH₂- |
| 166. | C₂H₅ | NC-CH₂-CH₂- |
| 167. | C₂H₅ | NC-CH₂-CH(CH₃)- |
| 168. | C₂H₅ | NC-CH₂-C(CH₃)₂- |
| 169. | C₂H₅ | NC-CH₂-CH₂-CH₂- |
| 170. | C₂H₅ | FH₂C-CH₂- |
| 171. | C₂H₅ | ClH₂C-CH₂- |
| 172. | C₂H₅ | BrH₂C-CH₂- |
| 173. | C₂H₅ | FH₂C-CH(CH₃)- |
| 174. | C₂H₅ | ClH₂C-CH(CH₃)- |
| 175. | C₂H₅ | BrH₂C-CH(CH₃)- |
| 176. | C₂H₅ | F₂HC-CH₂- |
| 177. | C₂H₅ | F₃ C-CH₂- |
| 178. | C₂H₅ | FH₂C-CH₂-CH₂- |
| 179.. | C₂H₅ | ClH₂C-CH₂-CH₂- |
| 180. | C₂H₅ | BrH₂C-CH₂-CH₂- |
| 181. | C₂H₅ | F₂HC-CH₂-CH₂- |
| 182. | C₂H₅ | F₃C-CH₂-CH₂- |
| 183. | C₂H₅ | CH₃-O-CH₂-CH₂- |
| 184. | C₂H₅ | CH₃-S-CH₂-CH₂- |
| 185. | C₂H₅ | CH₃-SO₂-CH₂-CH₂- |
| 186. | C₂H₅ | C₂H₅-O-CH₂-CH₂- |
| 187. | C₂Hₛ | (CH₃)₂CH-O-CH₂-CH₂- |
| 188. | C₂H₅ | C₂H₅-S-CH₂-CH₂- |
| 189. | C₂H₅ | C₂H₅-SO₂-CH₂-CH₂- |
| 190. | C₂H₅ | (CH₃)₂N-CH₂-CH₂- |
| 191. | C₂H₅ | (C₂H₅)₂N-CH₂-CH₂- |
| 192. | C₂H₅ | [(CH₃)₂CH]₂N-CH₂-CH₂- |
| 193. | C₂H₅ | CH₃-O-CH₂-CH(CH₃)- |
| 194. | C₂H₅ | CH₃S-CH₂-CH(CH₃)- |
| 195. | C₂H₅ | CH₃-SO₂-CH₂-CH(CH₃)- |
| 196. | C₂H₅ | C₂H₅-O-CH₂-CH(CH₃)- |
| 197. | C₂Hₛ | C₂H₅-S-CH₂CH(CH₃)- |
| 198. | C₂H₅ | C₂H₅-SO₂-CH₂-CH(CH₃)- |
| 199. | C₂H₅ | (CH₃)₂N-CH₂-CH(CH₃)- |
| 200. | C₂H₅ | (C₂H₅)₂N-CH₂-CH(CH₃)- |
| 201. | C₂H₅ | [(CH₃)₂CH]₂N-CH₂-CH(CH₃)- |
| 202. | C₂H₅ | CH₃-O-CH(CH₃)-CH₂- |
| 203. | C₂H₅ | CH₃-S-CH(CH₃)-CH₂- |
| 204. | C₂H₅ | CH₃-SO₂-CH(CH₃)-CH₂- |
| 205. | C₂H₅ | C₂H₅-O-CH(CH₃)-CH₂- |
| 206. | C₂H₅ | C₂H₅-S-CH(CH₃)-CH₂- |
| 207. | C₂H₅ | C₂H₅-SO₂-CH(CH₃)-CH₂- |
| 208. | C₂H₅ | (CH₃)₂N-CH(CH₃)-CH₂- |
| 209. | C₂H₅ | (C₂H₅)₂N-CH(CH₃)-CH₂- |
| 210. | C₂Hₛ | [(CH₃)₂CH]₂N-CH(CH₃)-CH₂- |
| 211. | C₂H₅ | CH₃-O-CH₂-CH₂-CH₂- |
| 212. | C₂H₅ | CH₃-S-CH₂-CH₂-CH₂- |
| 213. | C₂H₅ | CH₃-SO₂-CH₂-CH₂-CH₂- |
| 214. | C₂H₅ | C₂H₅-O-CH₂-CH₂-CH₂- |
| 215. | C₂H₅ | C₂H₅-S-CH₂-CH₂-CH₂- |
| 216. | C₂H₅ | C₂H₅-SO₂-CH₂-CH₂-CH₂- |
| 217. | C₂Hₛ | (CH₃)₂N-CH₂-CH₂-CH₂- |
| 218. | C₂H₅ | (C₂H₅)₂N-CH₂-CH₂-CH₂- |
| 219. | C₂H₅ | CH₃-O-CH₂-C{CH₃)₂- |
| 220. | C₂H₅ | CH₃-S-CH₂-C(CH₃)₂- |
| 221. | C₂Hₛ | CH₃-SO₂-CH₂-C(CH₃)₂- |
| 222. | C₂H₅ | C₂H₅-O-CH₂-C(CH₃)₂- |
| 223. | C₂H₅ | C₂H₅-S-CH₂-C(CH₃)₂- |
| 224. | C₂H₅ | C₂H₅-SO₂-CH₂-C(CH₃)₂- |
| 225. | C₂H₅ | (CH₃)₂N-CH₂-C(CH₃)₂- |
| 226. | C₂H₅ | (C₂H₅)₂N-CH₂-C(CH₃)₂- |
| 227. | C₂H₅ | [(CH₃)₂CH]₂N-CH₂-C(CH₃)₂- |
| 228. | C₂H₅ | Cl-CH₂-C≡C-CH₂- |
| 229. | C₂H₅ | CH₃-O-C(O)-CH₂ |
| 230. | C₂H₅ | C₂H₅-O-C(O)-CH₂ |
| 231. | C₂H₅ | CH₃-O-C(O)-CH(CH₃)- |
| 232. | C₂H₅ | C₂H₅-O-C(O)-CH{CH₃)- |
| 233. | C₂H₅ | (CH₃O)₂CH-CH₂- |
| 234. | C₂H₅ | (C₂HₛO)₂CH-CH₂- |
| 235. | OCH₃ | H |
| 236. | OCH₃ | CH₃ |
| 237. | OCH₃ | CH₃CH₂- |
| 238. | OCH₃ | (CH₃)₂CH- |
| 239. | OCH₃ | CH₃CH₂CH₂- |
| 240. | OCH₃ | n-C₄H₉ |
| 241. | OCH₃ | (CH₃)₃C- |
| 242. | OCH₃ | (CH₃)₂CH -CH₂- |
| 243. | OCH₃ | n-C₅H₁₁ |
| 244. | OCH₃ | (CH₃)₂CH-CH₂-CH₂- |
| 245. | OCH₃ | (C₂H₅)₂-CH- |
| 246. | OCH₃ | (CH₃)₃C-CH₂- |
| 247. | OCH₃ | (CH₃)₃C-CH₂-CH₂⁻ |
| 248. | OCH₃ | C₂H₅CH(CH₃)-CH₂- |
| 249. | OCH₃ | CH₃-CH₂-C(CH₃)₂- |
| 250. | OCH₃ | (CH₃)₂CH-CH(CH₃)- |
| 251. | OCH₃ | (CH₃)₃C-CH(CH₃)- |
| 252. | OCH₃ | (CH₃)₂CH-CH₂-CH(CH₃)- |
| 253. | OCH₃ | CH₃-CH₂-C(CH₃)(C₂H₅)- |
| 254. | OCH₃ | CH₃-CH₂-CH₂-C(CH₃)₂- |
| 255. | OCH₃ | C₂H₅-CH₂-CH(CH₃)-CH₂ |
| 256. | OCH₃ | cyclopropyl |
| 257. | OCH₃ | cyclopropyl-CH₂- |
| 258. | OCH₃ | cyclopropyl-CH(CH₃)- |
| 259. | OCH₃ | cyclobutyl |
| 260. | OCH₃ | cyclopentyl |
| 261. | OCH₃ | Cyclohexyl |
| 262. | OCH₃ | HC≡C-CH₂- |
| 263. | OCH₃ | HC≡C-CH(CH₃)- |
| 264. | OCH₃ | HC≡C-C(CH₃)₂- |
| 265. | OCH₃ | HC≡C-C(CH₃)(C₂H₅)- |
| 266. | OCH₃ | HC≡C-C(CH₃)(C₃H₇)- |
| 267. | OCH₃ | CH₂=CH-CH₂- |
| 268. | OCH₃ | H₂C=CH-CH(CH₃)- |
| 269. | OCH₃ | H₂C=CH-C(CH₃)₂- |
| 270. | OCH₃ | H₂C=CH-C(C₂H₅)(CH₃)- |
| 271. | OCH₃ | C₆H₅-CH₂- |
| 272. | OCH₃ | 4-(CH₃)₃C-C₆H₄-CH₂- |
| 273. | OCH₃ | C₆H₅-CH₂- |
| 274. | OCH₃ | 4-(CH₃)₃C-C₆H₄-CH₂- |
| 275. | OCH₃ | 4-Cl-C₆H₄-CH₂- |
| 276. | OCH₃ | 3-(CH₃O)-C₆H₄-CH₂- |
| 277. | OCH₃ | 4-(CH₃O)-C₆H₄-CH₂- |
| 278. | OCH₃ | 2-(CH₃O)-C₆H₄-CH₂- |
| 279. | OCH₃ | 3-Cl-C₆H₄-CH₂- |
| 280. | OCH₃ | 2-Cl-C₆H₄-CH₂- |
| 281. | OCH₃ | 4-(F₃C)-C₆H₄-CH₂- |
| 282. | OCH₃ | NC-CH₂- |
| 283. | OCH₃ | NC-CH₂-CH₂- |
| 284. | OCH₃ | NC-CH₂-CH(CH₃)- |
| 285. | OCH₃ | NC-CH₂-C(CH₃)₂- |
| 286. | OCH₃ | NC-CH₂-CH₂-CH₂- |
| 287. | OCH₃ | FH₂C-CH₂- |
| 288. | OCH₃ | ClH₂C-CH₂- |
| 289. | OCH₃ | BrH₂C-CH₂- |
| 290. | OCH₃ | FH₂C-CH(CH₃)- |
| 291. | OCH₃ | ClH₂C-CH(CH₃)- |
| 292. | OCH₃ | BrH₂C-CH(CH₃)- |
| 293. | OCH₃ | F₂HC-CH₂- |
| 294. | OCH₃ | F₃C-CH₂- |
| 295. | OCH₃ | FH₂C-CH₂-CH₂- |
| 296. | OCH₃ | ClH₂C-CH₂-CH₂- |
| 297. | OCH₃ | BrH₂C-CH₂-CH₂- |
| 298. | OCH₃ | F₂HC-CH₂-CH₂- |
| 299. | OCH₃ | F₃C-CH₂-CH₂- |
| 300. | OCH₃ | CH₃-O-CH₂-CH₂- |
| 301. | OCH₃ | CH₃-S-CH₂-CH₂- |
| 302. | OCH₃ | CH₃-SO₂-CH₂-CH₂- |
| 303. | OCH₃ | C₂H₅-O-CH₂-CH₂- |
| 304. | OCH₃ | (CH₃)₂CH-O-CH₂-CH₂- |
| 305. | OCH₃ | C₂H₅-S-CH₂-CH₂- |
| 306. | OCH₃ | C₂H₅SO₂-CH₂-CH₂- |
| 307. | OCH₃ | (CH₃)₂N-CH₂-CH₂- |
| 308. | OCH₃ | (C₂H₅)₂N-CH₂-CH₂- |
| 309. | OCH₃ | [(CH₃)₂CH]₂N-CHᵣCH₂- |
| 310. | OCH₃ | CH₃-O-CH₂-CH(CH₃)- |
| 311. | OCH₃ | CH₃-S-CH₂-CH(CH₃)- |
| 312. | OCH₃ | CH₃-SO₂-CH₂-CH(CH₃)- |
| 313. | OCH₃ | C₂H₅-O-CH₂-CH(CH₃)- |
| 314. | OCH₃ | C₂H₅-S-CH₂-CH(CH₃)- |
| 315. | OCH₃ | C₂H₅-SO₂-CH₂-CH(CH₃)- |
| 316. | OCH₃ | (CH₃)₂N-CH₂-CH(CH₃)- |
| 317. | OCH₃ | (C₂H₅)₂N-CH₂-CH(CH₃)- |
| 318. | OCH₃ | [(CH₃)₂CH]₂N-CH₂-CH(CH₃)- |
| 319. | OCH₃ | CH₃-O-CH(CH₃)-CH,- |
| 320. | OCH₃ | CH₃-S-CH(CH₃)-CH₂- |
| 321. | OCH₃ | CH₃-SO₂-CH(CH₃)-CH₂- |
| 322. | OCH₃ | C₂H₅-O-CH(CH₃)-CH₂- |
| 323. | OCH₃ | C₂H₅-S-CH{CH₃)-CH₂- |
| 324. | OCH₃ | C₂H₅-SO₂-CH(CH₃)-CH₂- |
| 325. | OCH₃ | (CH₃)₂N-CH(CH₃)-CH₂- |
| 326. | OCH₃ | (C₂H₅)₂N-CH(CH₃)-CH₂- |
| 327. | OCH₃ | [(CH₃)₂CH]₂N-CH(CH₃)-CH₂- |
| 328. | OCH₃ | CH₃-O-CH₂-CH₂-CH₂- |
| 329. | OCH₃ | CH₃-S-CH₂-CH₂-CH₂- |
| 330. | OCH₃ | CH₃-SO₂-CH₂-CH₂-CH₂- |
| 331. | OCH₃ | C₂H₅-O-CH₂-CH₂-CH₂- |
| 332. | OCH₃ | C₂H₅-S-CH₂-CH₂-CH₂- |
| 333. | OCH₃ | C₂H₅-SO₂-CH₂-CH₂-CH₂- |
| 334. | OCH₃ | (CH₃)₂N-CH₂-CH₂-CH₂- |
| 335. | OCH₃ | (C₂H₅)₂N-CH₂-CH₂-CH₂- |
| 336. | OCH₃ | CH₃-O-CH₂-C(CH₃)₂- |
| 337. | OCH₃ | CH₃-S-CH₂-C(CH₃)₂- |
| 338. | OCH₃ | CH₃-SO₂-CH₂-C(CH₃)₂- |
| 339. | OCH₃ | C₂H₅-O-CH₂-C(CH₃)₂- |
| 340. | OCH₃ | C₂H₅-S-CH₂-C (CH₃)₂- |
| 341. | OCH₃ | C₂H₅-SO₂-CH₂-C(CH)₃)₂- |
| 342. | OCH₃ | (CH₃)₂N-CH₂-C(CH₃)₂- |
| 343. | OCH₃ | (C₂H₅)₂N-CH₂-C(CH₃)₂- |
| 344. | OCH₃ | [(CH₃)₂CH]₂N-CH₂-C(CH₃)₂- |
| 345. | OCH₃ | Cl-CH₂-C≡C-CH₂- |
| 346. | OCH₃ | CH₃-O-C(O)-CH₂- |
| 347. | OCH₃ | C₂H₅-O-C(O)-CH₂- |
| 348. | OCH₃ | CH₃-O-C(O)-CH(CH₃)- |
| 349. | OCH₃ | C₂H₅-O-C(O)-CH(CH₃)- |
| 350. | OCH₃ | (CH₃O)₂CH-CH₂- |
| 351. | OCH₃ | (C₂H₅O)₂CH-CH₂- |
| 352. | OC₂H₅ | H |
| 353. | OC₂H₅ | CH₃ |
| 354. | OC₂H₅ | CH₃CH₂- |
| 355. | OC₂H₅ | (CH₃)₂CH- |
| 356. | OC₂H₅ | CH₃CH₂CH₂- |
| 357. | OC₂H₅ | n-C₄H₉ |
| 358. | OC₂H₅ | (CH₃)₃C- |
| 359. | OC₂H₅ | (CH₃)₂CH-CH₂- |
| 360. | OC₂H₅ | n-C₅H₁₁ |
| 361. | OC₂H₅ | (CH₃)₂CH-CH₂-CH₂- |
| 362. | OC₂H₅ | (C₂H₅)₂-CH- |
| 363. | OC₂H₅ | (CH₃)₃C-CH₂- |
| 364. | OC₂H₅ | (CH₃)₃C-CH₂-CH₂- |
| 365. | OC₂H₅ | C₂ H₅CH (CH₃)-CH₂- |
| 366. | OC₂H₅ | CH₃-CH₂-C(CH₃)₂- |
| 367. | OC₂H₅ | (CH₃)₂CH-CH(CH₃)- |
| 368. | OC₂H₅ | (CH₃)₃C-CH(CH₃)- |
| 369. | OC₂H₅ | (CH₃)₂CH-CH₂-CH(CH₃)- |
| 370. | OC₂H₅ | CH₃-CH₂-C(CH₃)(C₂H₅)- |
| 371. | OC₂H₅ | CH₃-CH₂-CH₂-C(CH₃)₂- |
| 372. | OC₂H₅ | C₂H₅-CH₂-CH(CH₃)-CH₂- |
| 373. | OC₂H₅ | cyclopropyl |
| 374. | OC₂H₅ | cyclopropyl-CH₂- |
| 375. | OC₂H₅ | cyclopropyl-CH{CH₃)- |
| 376. | OC₂H₅ | cyclobutyl |
| 377. | OC₂H₅ | cyclopentyl |
| 378. | OC₂H₅ | cyclohexyl |
| 379. | OC₂H₅ | HC≡C-CH₂- |
| 380. | OC₂H₅ | HC≡C-CH(CH₃)- |
| 381. | OC₂H₅ | HC≡C-C(CH₃)₂- |
| 382. | OC₂H₅ | HC≡C-C(CH₃)(C₂H₅)- |
| 383. | OC₂H₅ | HC≡C-C(CH₃)(C₃H₇)- |
| 384. | OC₂H₅ | CH₂=CH-CH₂- |
| 385. | OC₂H₅ | H₂C=CH-CH(CH₃)- |
| 386. | OC₂Hₛ | H₂C=CH-C(CH₃)₂- |
| 387. | OC₂H₅ | H₂C=CH-C(C₂H₅)(CH₃)- |
| 388. | OC₂H₅ | C₆H₅-CH₂- |
| 389. | OC₂H₅ | 4-(CH₃)₃C-C₆H₄-CH₂- |
| 390. | OC₂H₅ | C₆H₅-CH₂- |
| 391. | OC₂H₅ | 4-(CH₃)₃C-C₆H₄-CH₂- |
| 392. | OC₂Hₛ | 4-Cl-C₆H₄-CH₂- |
| 393. | OC₂H₅ | 3-(CH₃O)-C₆H₄-CH₂- |
| 394. | OC₂H₅ | 4-(CH₃O)-C₆H₄-CH₂- |
| 395. | OC₂H₅ | 2-(CH₃O)-C₆H₄-CH₂- |
| 396. | OC₂Hₛ | 3-Cl-C₆H₄-CH₂- |
| 397. | OC₂H₅ | 2-Cl-C₆H₄CH₂- |
| 398. | OC₂H₅ | 4-(F₃C)-C₆H₄-CH₂- |
| 399. | OC₂H₅ | NC-CH₂- |
| 400. | OC₂H₅ | NC-CH₂-CH₂- |
| 401. | OC₂H₅ | NC-CH₂-CH(CH₃)- |
| 402. | OC₂H₅ | NC-CH₂-C(CH₃)₂- |
| 403. | OC₂H₅ | NC-CH₂-CH₂-CH₂- |
| 404. | OC₂H₅ | FH₂C-CH₂- |
| 405. | OC₂H₅ | CIH₂C-CH₂- |
| 406. | OC₂H₅ | BrH₂C-CH₂- |
| 407. | OC₂H₅ | FH₂C-CH(CH₃)- |
| 408. | OC₂H₅ | ClH₂C-CH(CH₃)- |
| 409. | OC₂H₅ | BrH₂C-CH(CH₃)- |
| 410. | OC₂H₅ | F₂HC-CH₂- |
| 411. | OC₂H₅ | F₃C-CH₂- |
| 412. | OC₂H₅ | FH₂C-CH₂-CH₂- |
| 413. | OC₂H₅ | ClH₂C-CH₂-CH₂- |
| 414. | OC₂H₅ | BrH₂C-CH₂-CH₂- |
| 415. | OC₂H₅ | F₂HC-CH₂-CH₂- |
| 416. | OC₂H₅ | F₃C-CH₂-CH₂- |
| 417. | OC₂H₅ | CH₃-O-CH₂-CH₂- |
| 418. | OC₂H₅ | CH₃-S-CH₂-CH₂- |
| 419. | OC₂H₅ | CH₃-SO₂-CH₂-CH₂- |
| 420. | OC₂Hₛ | C₂H₅-O-CH₂-CH₂- |
| 421. | OC₂H₅ | (CH₃)₂CH-O-CH₂-CH₂- |
| 422. | OC₂H₅ | C₂H₅-S-CH₂-CH₂- |
| 423. | OC₂H₅ | C₂H₅- SO₂-CH₂-CH₂- |
| 424. | OC₂H₅ | (CH₃)₂N-CH₂-CH₂- |
| 425. | OC₂H₅ | (C₂H₅)₂N-CH₂-CH₂- |
| 426. | OC₂H₅ | [(CH₃)₂CH]₂N-CH₂-CH₂- |
| 427. | OC₂H₅ | CH₃-O-CH₂-CH(CH₃)- |
| 428. | OC₂H₅ | CH₃-S-CH₂-CH(CH₃)- |
| 429. | OC₂H₅ | CH₃-SO₂-CH₂-CH(CH₃)- |
| 430. | OC₂H₅ | C₂H₅-O-CH₂-CH(CH₃)- |
| 431. | OC₂H₅ | C₂H₅-S-CH₂-CH(CH₃)- |
| 432. | OC₂H₅ | C₂H₅-SO₂-CH₂-CH(CH₃)- |
| 433. | OC₂H₅ | (CH₃)₂N-CH₂-CH(CH₃)- |
| 434. | OC₂H₅ | (C₂H₅)₂N-CH₂-CH(CH₃)- |
| 435. | OC₂Hₛ | [(CH₃)₂CH]₂N-CH₂-CH{CH₃)- |
| 436. | OC₂H₅ | CH₃-O-CH(CH₃)-CH,- |
| 437. | OC₂H₅ | CH₃-S-CH(CH₃)-CH₂- |
| 438. | OC₂H₅ | CH₃-SO₂-CH(CH₃)-CH₂- |
| 439. | OC₂H₅ | C₂H₅-O-CH(CH₃)-CH₂- |
| 440. | OC₂Hₛ | C₂H₅-S-CH(CH₃)-CH₂- |
| 441. | OC₂H₅ | C₂H₅-SO₂-CH(CH₃)-CH₂- |
| 442. | OC₂H₅ | (CH₃)₂N-CH(CH₃)-CH₂- |
| 443. | OC₂H₅ | (C₂H₅)₂N-CH(CH₃)-CH₂- |
| 444. | OC₂H₅ | [(CH₃)₂CH]₂N-CH(CH₃)-CH₂- |
| 445. | OC₂H₅ | CH₃-O-CH₂-CH₂-CH₂- |
| 446. | OC₂H₅ | CH₃-S-CH₂-CH₂-CH₂- |
| 447. | OC₂H₅ | CH₃-SO₂-CH₂-CH₂-CH₂- |
| 448. | OC₂H₅ | C₂H₅-O-CH₂-CH₂-CH₂- |
| 449. | OC₂H₅ | C₂H₅-S-CH₂-CH₂-CH₂- |
| 450. | OC₂H₅ | C₂H₅-SO₂-CH₂-CH₂-CH₂- |
| 451. | OC₂H₅ | (CH₃)₂N-CH₂-CH₂-CH₂- |
| 452. | OC₂H₅ | (C₂H₅)₂N-CH₂-CH₂-CH₂- |
| 453. | OC₂Hₛ | CH₃-O-CH₂-C(CH₃)₂- |
| 454. | OC₂H₅ | CH₃-S-CH₂-C(CH₃)₂- |
| 455. | OC₂H₅ | CH₃-SO₂-CH₂-C(CH₃)₂- |
| 456. | OC₂H₅ | C₂H₅-O-CH₂-C(CH₃)₂- |
| 457. | OC₂H₅ | C₂H₅-S-CH₂-C(CH₃)₂- |
| 458. | OC₂H₅ | C₂H₅-SO₂-CH₂-C(CH₃)₂- |
| 459. | OC₂H₅ | (CH₃)₂N-CH₂-C(CH₃)₂- |
| 460. | OC₂H₅ | (C₂H₅)₂N-CH₂-C(CH₃)₂- |
| 461. | OC₂Hₛ | [(CH₃)₂CH]₂N-CH₂-C(CH₃)₂- |
| 462. | OC₂Hₛ | Cl-CH₂-C≡C-CH₂- |
| 463. | OC₂H₅ | CH₃-O-C(O)-CH₂- |
| 464. | OC₂H₅ | C₂H₅-O-C(O)-CH₂- |
| 465. | OC₂H₅ | CH₃-O-C(O)-CH(CH₃)- |
| 466. | OC₂H₅ | C₂H₅-O-C(O)-CH(CH₃)- |
| 467. | OC₂H₅ | (CH₃O)₂CH-CH₂- |
| 468. | OC₂H₅ | (C₂H₅O)₂CH-CH₂- |
| 469. | CF₃ | H |
| 470. | CF₃ | CH₃ |
| 471. | CF₃ | CH₃CH₂- |
| 472. | CF₃ | (CH₃)₂CH- |
| 473. | CF₃ | CH₃CH₂CH₂- |
| 474. | CF₃ | n-C₄H₉ |
| 475. | CF₃ | (CH₃)₃C- |
| 476. | CF₃ | (CH₃)₂CH-CH₂- |
| 477. | CF₃ | n-C₅H₁₁ |
| 478. | CF₃ | (CH₃)₂CH-CH₂-CH₂- |
| 479. | CF₃ | (C₂H₅)₂-CH- |
| 480. | CF₃ | (CH₃)₃C-CH₂- |
| 481. | CF₃ | (CH₃)₃C-CH₂-CH₂- |
| 482. | CF₃ | C₂ H₅CH (CH₃)-CH₂- |
| 483. | CF₃ | CH₃-CH₂-C(CH₃)₂- |
| 484. | CF₃ | (CH₃)₂CH-CH(CH₃)- |
| 485. | CF₃ | (CH₃)₃C-CH(CH₃)- |
| 486. | CF₃ | (CH₃)₂CH-CH₂-CH(CH₃)- |
| 487. | CF₃ | CH₃-CH₂-C(CH₃)(C₂H₅)- |
| 488. | CF₃ | CH₃-CH₂-CH₂-C(CH₃)₂- |
| 489.. | CF₃ | C₂H₅-CH₂-CH(CH₃)-CH₂- |
| 490. | CF₃ | cyclopropyl |
| 491. | CF₃ | cyclopropyl-CH₂- |
| 492. | CF₃ | cyclopropyl-CH{CH₃)- |
| 493. | CF₃ | cyclobutyl |
| 494. | CF₃ | cyclopentyl |
| 495. | CF₃ | cyclohexyl |
| 496. | CF₃ | HC≡C-CH₂- |
| 497. | CF₃ | HC≡C-CH(CH₃)- |
| 498. | CF₃ | HC≡C-C(CH₃)₂- |
| 499. | CF₃ | HC≡C-C(CH₃)(C₂H₅)- |
| 500. | CF₃ | HC≡C-C(CH₃)(C₃H₇)- |
| 501. | CF₃ | CH₂=CH-CH₂- |
| 502. | CF₃ | H₂C=CH-CH(CH₃)- |
| 503. | CF₃ | H₂C=CH-C(CH₃)₂- |
| 504. | CF₃ | H₂C=CH-C(C₂H₅)(CH₃)- |
| 505. | CF₃ | C₆H₅-CH₂- |
| 506. | CF₃ | 4-(CH₃)₃C-C₆H₄-CH₂- |
| 507. | CF₃ | C₆H₅-CH₂- |
| 508. | CF₃ | 4-(CH₃)₃C-C₆H₄-CH₂- |
| 509. | CF₃ | 4-Cl-C₆H₄-CH₂- |
| 510. | CF₃ | 3-(CH₃O)-C₆H₄-CH₂- |
| 511. | CF₃ | 4-(CH₃O)-C₆H₄-CH₂- |
| 512. | CF₃ | 2-(CH₃O)-C₆H₄-CH₂- |
| 513. | CF₃ | 3-Cl-C₆H₄-CH₂- |
| 514. | CF₃ | 2-Cl-C₆H₄CH₂- |
| 515. | CF₃ | 4-(F₃C)-C₆H₄-CH₂- |
| 516. | CF₃ | NC-CH₂- |
| 517. | CF₃ | NC-CH₂-CH₂- |
| 518. | CF₃ | NC-CH₂-CH(CH₃)- |
| 519. | CF₃ | NC-CH₂-C(CH₃)₂- |
| 520. | CF₃ | NC-CH₂-CH₂-CH₂- |
| 521. | CF₃ | FH₂C-CH₂- |
| 522. | CF₃ | ClH₂C-CH₂- |
| 523. | CF₃ | BrH₂C-CH₂- |
| 524. | CF₃ | FH₂C-CH(CH₃)- |
| 525. | CF₃ | ClH₂C-CH(CH₃)- |
| 526. | CF₃ | BrH₂C-CH(CH₃)- |
| 527. | CF₃ | F₂HC-CH₂- |
| 528. | CF₃ | F₃C-CH₂- |
| 529. | CF₃ | FH₂C-CH₂-CH₂- |
| 530. | CF₃ | ClH₂C-CH₂-CH₂- |
| 531. | CF₃ | BrH₂C-CH₂-CH₂- |
| 532. | CF₃ | F₂HC-CH₂-CH₂- |
| 533. | CF₃ | F₃C-CH₂-CH₂- |
| 534. | CF₃ | CH₃-O-CH₂-CH₂- |
| 535. | CF₃ | CH₃-S-CH₂-CH₂- |
| 536. | CF₃ | CH₃-SO₂-CH₂-CH₂- |
| 537. | CF₃ | C₂H₅-O-CH₂-CH₂- |
| 538. | CF₃ | (CH₃)₂CH-O-CH₂-CH₂- |
| 539. | CF₃ | C₂H₅-S-CH₂-CH₂- |
| 540. | CF₃ | C₂H₅- SO₂-CH₂-CH₂- |
| 541. | CF₃ | (CH₃)₂N-CH₂-CH₂- |
| 542. | CF₃ | (C₂H₅)₂N-CH₂-CH₂- |
| 543. | CF₃ | [(CH₃)₂CH]₂N-CH₂-CH₂- |
| 544. | CF₃ | CH₃-O-CH₂-CH(CH₃)- |
| 545. | CF₃ | CH₃-S-CH₂-CH(CH₃)- |
| 546. | CF₃ | CH₃-SO₂-CH₂-CH(CH₃)- |
| 547. | CF₃ | C₂H₅-O-CH₂-CH(CH₃)- |
| 548. | CF₃ | C₂H₅-S-CH₂-CH(CH₃)- |
| 549. | CF₃ | C₂H₅-SO₂-CH₂-CH(CH₃)- |
| 550. | CF₃ | (CH₃)₂N-CH₂-CH(CH₃)- |
| 551. | CF₃ | (C₂H₅)₂N-CH₂-CH(CH₃)- |
| 552. | CF₃ | [(CH₃)₂CH]₂N-CH₂-CH{CH₃)- |
| 553. | CF₃ | CH₃-O-CH(CH₃)-CH,- |
| 554. | CF₃ | CH₃-S-CH(CH₃)-CH₂- |
| 555. | CF₃ | CH₃-SO₂-CH(CH₃)-CH₂- |
| 556. | CF₃ | C₂H₅-O-CH(CH₃)-CH₂- |
| 557. | CF₃ | C₂H₅-S-CH(CH₃)-CH₂- |
| 558. | CF₃ | C₂H₅-SO₂-CH(CH₃)-CH₂- |
| 559. | CF₃ | (CH₃)₂N-CH(CH₃)-CH₂- |
| 560. | CF₃ | (C₂H₅)₂N-CH(CH₃)-CH₂- |
| 561. | CF₃ | [(CH₃)₂CH]₂N-CH(CH₃)-CH₂- |
| 562. | CF₃ | CH₃-O-CH₂-CH₂-CH₂- |
| 563. | CF₃ | CH₃-S-CH₂-CH₂-CH₂- |
| 564. | CF₃ | CH₃-SO₂-CH₂-CH₂-CH₂- |
| 565. | CF₃ | C₂H₅-O-CH₂-CH₂-CH₂- |
| 566. | CF₃ | C₂H₅-S-CH₂-CH₂-CH₂- |
| 567. | CF₃ | C₂H₅-SO₂-CH₂-CH₂-CH₂- |
| 568. | CF₃ | (CH₃)₂N-CH₂-CH₂-CH₂- |
| 569. | CF₃ | (C₂H₅)₂N-CH₂-CH₂-CH₂- |
| 570. | CF₃ | CH₃-O-CH₂-C(CH₃)₂- |
| 571. | CF₃ | CH₃-S-CH₂-C(CH₃)₂- |
| 572. | CF₃ | CH₃-SO₂-CH₂-C(CH₃)₂- |
| 573. | CF₃ | C₂H₅-O-CH₂-C(CH₃)₂- |
| 574. | CF₃ | C₂H₅-S-CH₂-C(CH₃)₂- |
| 575. | CF₃ | C₂H₅-SO₂-CH₂-C(CH₃)₂- |
| 576. | CF₃ | (CH₃)₂N-CH₂-C(CH₃)₂- |
| 577. | CF₃ | (C₂H₅)₂N-CH₂-C(CH₃)₂- |
| 578. | CF₃ | [(CH₃)₂CH]₂N-CH₂-C(CH₃)₂- |
| 579. | CF₃ | Cl-CH₂-C=C-CH₂- |
| 580. | CF₃ | CH₃-O-C(O)-CH₂ |
| 581. | CF₃ | C₂H₅-O-C(O)-CH₂ |
| 582. | CF₃ | CH₃-O-C(O)-CH(CH₃)- |
| 583. | CF₃ | C₂H₅-O-C(O)-CH(CH₃)- |
| 584. | CF₃ | (CH₃-O)₂CH-CH₂- |
| 585. | CF₃ | (C₂H₅O)₂CH-CH₂- |
| 586. | OCHF₂ | H |
| 587. | OCHF₂ | CH₃ |
| 588. | OCHF₂ | CH₃CH₂- |
| 589. | OCHF₂ | (CH₃)₂CH- |
| 590. | OCHF₂ | CH₃CH₂CH₂- |
| 591. | OCHF₂ | n-C₄H₉ |
| 592. | OCHF₂ | (CH₃)₃C- |
| 593. | OCHF₂ | (CH₃)₂CH-CH₂- |
| 594. | OCHF₂ | n-C₅H₁₁ |
| 595. | OCHF₂ | (CH₃)₂CH-CH₂-CH₂- |
| 596. | OCHF₂ | (C₂H₅)₂-CH- |
| 597. | OCHF₂ | (CH₃)₃C-CH₂- |
| 598. | OCHF₂ | (CH₃)₃C-CH₂-CH₂- |
| 599. | OCHF₂ | C₂H₅CH(CH₃)-CH₂- |
| 600. | OCHF₂ | CH₃-CH₂-C(CH₃)₂- |
| 601. | OCHF₂ | (CH₃)₂CH-CH(CH₃)- |
| 602. | OCHF₂ | (CH₃)₃C-CH(CH₃)- |
| 603. | OCHF₂ | (CH₃)₂CH-CH₂-CH(CH₃)- |
| 604. | OCHF₂ | CH₃CH₂-C(CH₃)(C₂H₅)- |
| 605. | OCHF₂ | CH₃-CH₂-CH₂-C(CH₃)₂- |
| 606. | OCHF₂ | C₂H₅-CH₂-CH(CH₃)-CH₂- |
| 607. | OCHF₂ | cyclopropyl |
| 608. | OCHF₂ | cyclopropyl-CH₂- |
| 609. | OCHF₂ | cyclopropyl-CH(CH₃)- |
| 610. | OCHF₂ | cyclobutyl |
| 611. | OCHF₂ | cyclopentyl |
| 612. | OCHF₂ | cyclohexyl |
| 613. | OCHF₂ | HC≡C-CH₂- |
| 614. | OCHF₂ | HC≡C-CH(CH₃)- |
| 615. | OCHF₂ | HC≡C-C(CH₃)₂- |
| 616. | OCHF₂ | HC≡C-C(CH₃)(C₂H₅)- |
| 617. | OCHF₂ | HC≡C-C(CH₃)(C₃H₇)- |
| 618. | OCHF₂ | CH₂=CH-CH₂- |
| 619. | OCHF₂ | H₂C=CH-CH(CH₃)- |
| 620. | OCHF₂ | H₂C=CH-C(CH₃)₂- |
| 621. | OCHF₂ | H₂C=CH-C(C₂H₅)(CH₃)- |
| 622. | OCHF₂ | C₆H₅-CH₂- |
| 623. | OCHF₂ | 4-(CH₃)₃C-C₆H₄-CH₂- |
| 624. | OCHFz | C₆H₅-CH₂- |
| 625. | OCHF₂ | 4-(CH₃)₃C-C₆H₄-CH₂- |
| 626. | OCHF₂ | 4-Cl-C₆H₄-CH₂- |
| 627. | OCHF₂ | 3-(CH₃O)-C₆H₄-CH₂- |
| 628. | OCHF₂ | 4-(CH₃O)-C₆H₄-CH₂- |
| 629. | OCHF₂ | 2-(CH₃O)-C₆H₄-CH₂- |
| 630. | OCHF₂ | 3-Cl-C₆H₄-CH₂- |
| 631. | OCHF₂ | 2-Cl-C₆H₄CH₂- |
| 632. | OCHF₂ | 4-(F₃C)-C₆H₄-CH₂- |
| 633. | OCHF₂ | NC-CH₂- |
| 634. | OCHF₂ | NC-CH₂-CH₂- |
| 635. | OCHF₂ | NC-CH₂-CH(CH₃)- |
| 636. | OCHF₂ | NC-CH₂-C(CH₃)₂- |
| 637. | OCHF₂ | NC-CH₂-CH₂-CH₂- |
| 638. | OCHF₂ | FH₂C-CH₂- |
| 639. | OCHF₂ | ClH₂C-CH₂- |
| 640. | OCHF₂ | BrH₂C-CH₂- |
| 641. | OCHF₂ | FH₂C-CH(CH₃)- |
| 642. | OCHF₂ | ClH₂C-CH(CH₃)- |
| 643. | OCHF₂ | BrH₂C-CH(CH₃)- |
| 644. | OCHF₂ | F₂HC-CH₂- |
| 645. | OCHF₂ | F₃C-CH₂- |
| 646. | OCHF₂ | FH₂C-CH₂-CH₂- |
| 647. | OCHF₂ | ClH₂C-CH₂-CH₂- |
| 648. | OCHF₂ | BrH₂C-CH₂-CH₂- |
| 649. | OCHF₂ | F₂HC-CH₂-CH₂- |
| 650. | OCHF₂ | F₃C-CH₂-CH₂- |
| 651. | OCHF₂ | CH₃-O-CH₂-CH₂- |
| 652. | OCHF₂ | CH₃-S-CH₂-CH₂- |
| 653. | OCHF₂ | CH₃-SO₂-CH₂-CH₂- |
| 654. | OCHF₂ | C₂H₅-O-CH₂-CH₂- |
| 655. | OCHF₂ | (CH₃)₂CH-O-CH₂-CH₂- |
| 656. | OCHF₂ | C₂H₅-S-CH₂-CH₂- |
| 657. | OCHF₂ | C₂H₅- SO₂-CH₂-CH₂- |
| 658. | OCHF₂ | (CH₃)₂N-CH₂-CH₂- |
| 659. | OCHF₂ | (C₂H₅)₂N-CH₂-CH₂- |
| 660. | OCHF₂ | [(CH₃)₂CH]₂N-CH₂-CH₂- |
| 661. | OCHF₂ | CH₃-O-CH₂-CH(CH₃)- |
| 662. | OCHF₂ | CH₃-S-CH₂-CH(CH₃)- |
| 663. | OCHF₂ | CH₃-SO₂-CH₂-CH(CH₃)- |
| 664. | OCHF₂ | C₂H₅-O-CH₂-CH(CH₃)- |
| 665. | OCHF₂ | C₂H₅-S-CH₂-CH(CH₃)- |
| 666. | OCHF₂ | C₂H₅-SO₂-CH₂-CH(CH₃)- |
| 667. | OCHF₂ | (CH₃)₂N-CH₂-CH(CH₃)- |
| 668. | OCHF₂ | (C₂H₅}₂N-CH₂-CH(CH₃)- |
| 669. | OCHF₂ | [(CH₃)₂CH]₂N-CH₂-CH{CH₃)- |
| 670. | OCHF₂ | CH₃-O-CH(CH₃)-CH₂- |
| 671. | OCHF₂ | CH₃-S-CH(CH₃)-CH₂- |
| 672. | OCHF₂ | CH₃-SO₂-CH(CH₃)-CH₂- |
| 673. | OCHF₂ | C₂H₅-O-CH(CH₃)-CH₂- |
| 674. | OCHF₂ | C₂H₅-S-CH(CH₃)-CH₂- |
| 675. | OCHF₂ | C₂H₅-SO₂-CH(CH₃)-CH₂- |
| 676. | OCHF₂ | (CH₃)₂N-CH(CH₃)-CH₂- |
| 677. | OCHF₂ | (C₂H₅)₂N-CH(CH₃)-CH₂- |
| 678. | OCHF₂ | [(CH₃)₂CH]₂N-CH(CH₃)-CH₂- |
| 679. | OCHF₂ | CH₃-O-CH₂-CH₂-CH₂- |
| 680. | OCHF₂ | CH₃-S-CH₂-CH₂-CH₂- |
| 681. | OCHF₂ | CH₃-SO₂-CH₂-CH₂-CH₂- |
| 682. | OCHF₂ | C₂H₅-O-CH₂-CH₂-CH₂- |
| 683- | OCHF₂ | C₂H₅-S-CH₂-CH₂-CH₂- |
| 684. | OCHF₂ | C₂H₅-SO₂-CH₂-CH₂-CH₂- |
| 685. | OCHF₂ | (CH₃)₂N-CH₂-CH₂-CH₂- |
| 686. | OCHF₂ | (C₂H₅)₂N-CH₂-CH₂-CH₂- |
| 687. | OCHF₂ | CH₃-O-CH₂-C(CH₃)₂- |
| 688. | OCHF₂ | CH₃-S-CH₂-C(CH₃)₂- |
| 689. | OCHF₂ | CH₃-SO₂-CH₂-C(CH₃)₂- |
| 690. | OCHF₂ | C₂H₅-O-CH₂-C(CH₃)₂- |
| 691. | OCHF₂ | C₂H₅-S-CH₂-C(CH₃)₂- |
| 692. | OCHF₂ | C₂H₅-SO₂-CH₂-C(CH₃)₂- |
| 693. | OCHF₂ | (CH₃)₂N-CH₂-C(CH₃)₂- |
| 694. | OCHF₂ | (C₂H₅)₂N-CH₂-C(CH₃)₂- |
| 695. | OCHF₂ | [(CH₃)₂CH]₂N-CH₂-C(CH₃)₂- |
| 696. | OCHF₂ | C1-CH₂-C≡C-CH₂- |
| 697. | OCHF₂ | CH₃-O-C(O)-CH₂ |
| 698. | OCHF₂ | C₂H₅-O-C(O)-CH₂ |
| 699. | OCHF₂ | CH₃-O-C(O)-CH(CH₃)- |
| 700. | OCHF₂ | C₂H₅-O-C(O)-CH(CH₃)- |
| 701. | OCHF₂ | (CH₃O)₂CH-CH₂- |
| 702. | OCHF₂ | (C₂H₅O)₂CH-CH₂- |
| 703. | OCF₃ | H |
| 704. | OCF₃ | CH₃ |
| 705. | OCF₃ | CH₃CH₂- |
| 706. | OCF₃ | (CH₃)₂CH- |
| 707. | OCF₃ | CH₃CH₂CH₂- |
| 708. | OCF₃ | n-C₄H₉ |
| 709. | OCF₃ | (CH₃)₃C- |
| 710. | OCF₃ | (CH₃)₂CH -CH₂- |
| 711. | OCF₃ | n-C₅H₁₁ |
| 712. | OCF₃ | (CH₃)₂CH-CH₂-CH₂- |
| 713. | OCF₃ | (C₂H₅)₂-CH- |
| 714. | OCF₃ | (CH₃)₃C-CH₂- |
| 715. | OCF₃ | (CH₃)₃C-CH₂-CH₂- |
| 716. | OCF₃ | C₂H₅CH(CH₃)-CH₂- |
| 717. | OCF₃ | CH₃-CH₂-C(CH₃)₂- |
| 718. | OCF₃ | (CH₃)₂CH-CH(CH₃)- |
| 719. | OCF₃ | (CH₃)₃C-CH(CH₃)- |
| 720. | OCF₃ | (CH₃)₂CH-CH₂-CH(CH₃)- |
| 721. | OCF₃ | CH₃-CH₂-C(CH₃)(C₂H₅)- |
| 722. | OCF₃ | CH₃-CH₂-CH₂-C(CH₃)₂- |
| 723, | OCF₃ | C₂H₅-CH₂-CH(CH₃)-CH₂⁻ |
| 724. | OCF₃ | cyclopropyl |
| 725. | OCF₃ | cyclopropyl-CH₂- |
| 726, | OCF₃ | cyclopropyl-CH(CH₃)- |
| 727. | OCF₃ | cyclobutyl |
| 728. | OCF₃ | cyclopentyl |
| 729. | OCF₃ | Cyclohexyl |
| 730. | OCF₃ | HC≡C-CH₂- |
| 731. | OCF₃ | HC≡C-CH(CH₃)- |
| 732. | OCF₃ | HC≡C-C(CH₃)₂- |
| 733. | OCF₃ | HC≡C-C(CH₃)(C₂H₅)- |
| 734. | OCF₃ | HC≡C-C(CH₃)(C₃H₇)- |
| 735. | OCF₃ | CH₂=CH-CH₂- |
| 736. | OCF₃ | H₂C=CH-CH(CH₃)- |
| 737. | OCF₃ | H₂C=CH-C(CH₃)₂- |
| 738. | OCF₃ | H₂C=CH-C(C₂H₅)(CH₃)- |
| 739. | OCF₃ | C₆H₅-CH₂- |
| 740. | OCF₃ | 4-(CH₃)₃C-C₆H₄-CH₂- |
| 741. | OCF₃ | C₆H₅-CH₂- |
| 742. | OCF₃ | 4-(CH₃)₃C-C₆H₄-CH₂- |
| 743. | OCF₃ | 4-Cl-C₆H₄-CH₂- |
| 744. | OCF₃ | 3-(CH₃O)-C₆H₄-CH₂- |
| 745. | OCF₃ | 4-(CH₃O)-C₆H₄-CH₂- |
| 746. | OCF₃ | 2-(CH₃O)-C₆H₄-CH₂- |
| 747. | OCF₃ | 3-Cl-C₆H₄-CH₂- |
| 748. | OCF₃ | 2-Cl-C₆H₄-CH₂- |
| 749. | OCF₃ | 4-(F₃C)-C₆H₄-CH₂- |
| 750. | OCF₃ | NC-CH₂- |
| 751. | OCF₃ | NC-CH₂-CH₂- |
| 752. | OCF₃ | NC-CH₂-CH(CH₃)- |
| 753. | OCF₃ | NC-CH₂-C(CH₃)₂- |
| 754. | OCF₃ | NC-CH₂-CH₂-CH₂- |
| 755. | OCF₃ | FH₂C-CH₂- |
| 756. | OCF₃ | ClH₂C-CH₂- |
| 757. | OCF₃ | BrH₂C-CH₂- |
| 758. | OCF₃ | FH₂C-CH(CH₃)- |
| 759. | OCF₃ | ClH₂C-CH(CH₃)- |
| 760. | OCF₃ | BrH₂C-CH(CH₃)- |
| 761. | OCF₃ | F₂HC-CH₂- |
| 762. | OCF₃ | F₃C-CH₂- |
| 763. | OCF₃ | FH₂C-CH₂-CH₂- |
| 764. | OCF₃ | ClH₂C-CH₂-CH₂- |
| 765. | OCF₃ | BrH₂C-CH₂-CH₂- |
| 766. | OCF₃ | F₂HC-CH₂-CH₂- |
| 767. | OCF₃ | F₃C-CH₂-CH₂- |
| 768. | OCF₃ | CH₃-O-CH₂-CH₂- |
| 769. | OCF₃ | CH₃-S-CH₂-CH₂- |
| 770. | OCF₃ | CH₃-SO₂-CH₂-CH₂- |
| 771. | OCF₃ | C₂H₅-O-CH₂-CH₂- |
| 772. | OCF₃ | (CH₃)₂CH-₀-CH₂-CH₂- |
| 773. | OCF₃ | C₂ H₅-S-CH₂-CH₂- |
| 774. | OCF₃ | C₂H₅SO₂-CH₂-CH₂- |
| 775. | OCF₃ | (CH₃)₂N-CH₂-CH₂- |
| 776. | OCF₃ | (C₂H₅)₂N-CH₂-CH₂- |
| 777. | OCF₃ | [(CH₃)₂CH]₂N-CHᵣCH₂- |
| 778. | OCF₃ | CH₃-O-CH₂-CH(CH₃)- |
| 779. | OCF₃ | CH₃-S-CH₂-CH(CH₃)- |
| 780. | OCF₃ | CH₃-SO₂-CH₂-CH(CH₃)- |
| 781. | OCF₃ | C₂H₅-O-CH₂-CH(CH₃)- |
| 782. | OCF₃ | C₂H₅-S-CH₂-CH(CH₃)- |
| 783. | OCF₃ | C₂H₅-SO₂-CH₂-CH(CH₃)- |
| 784. | OCF₃ | (CH₃)₂N-CH₂-CH(CH₃)- |
| 785. | OCF₃ | (C₂H₅)₂N-CH₂-CH(CH₃)- |
| 786. | OCF₃ | [(CH₃)₂CH]₂N-CH₂-CH(CH₃)- |
| 787. | OCF₃ | CH₃-O-CH(CH₃)-CH₂- |
| 788. | OCF₃ | CH₃-S-CH(CH₃)-CH₂- |
| 789. | OCF₃ | CH₃-SO₂-CH(CH₃)-CH₂- |
| 790. | OCF₃ | C₂H₅-O-CH(CH₃)-CH₂- |
| 791. | OCF₃ | C₂H₅-S-CH{CH₃)-CH₂- |
| 792. | OCF₃ | C₂H₅-SO₂-CH(CH₃)-CH₂- |
| 793. | OCF₃ | (CH₃)₂N-CH(CH₃)-CH₂- |
| 794. | OCF₃ | (C₂H₅)₂N-CH(CH₃)-CH₂- |
| 795. | OCF₃ | [(CH₃)₂CH]₂N-CH(CH₃)-CH₂- |
| 796. | OCF₃ | CH₃-O-CH₂-CH₂-CH₂- |
| 797. | OCF₃ | CH₃-S-CH₂-CH₂-CH₂- |
| 798. | OCF₃ | CH₃-SO₂-CH₂-CH₂-CH₂- |
| 799. | OCF₃ | C₂H₅-O-CH₂-CH₂-CH₂- |
| 800. | OCF₃ | C₂H₅-S-CH₂-CH₂-CH₂- |
| 801. | OCF₃ | C₂H₅-SO₂-CH₂-CH₂-CH₂- |
| 802. | OCF₃ | (CH₃)₂N-CH₂-CH₂-CH₂- |
| 803. | OCF₃ | (C₂H₅)₂N-CH₂-CH₂-CH₂- |
| 804. | OCF₃ | CH₃-O-CH₂-C(CH₃)₂- |
| 805. | OCF₃ | CH₃-S-CH₂-C(CH₃)₂- |
| 806. | OCF₃ | CH₃-SO₂-CH₂-C(CH₃)₂- |
| 807. | OCF₃ | C₂H₅-O-CH₂-C(CH₃)₂- |
| 808. | OCF₃ | C₂H₅-S-CH₂-C (CH₃)₂- |
| 809. | OCF₃ | C₂H₅-SO₂-CH₂-C(CH)₃)₂- |
| 810. | OCF₃ | (CH₃)₂N-CH₂-C(CH₃)₂- |
| 811. | OCF₃ | (C₂H₅)₂N-CH₂-C(CH₃)₂- |
| 812. | OCF₃ | [(CH₃)₂CH]₂N-CH₂-C(CH₃)₂- |
| 813. | OCF₃ | Cl-CH₂-C≡C-CH₂- |
| 814. | OCF₃ | CH₃-O-C(O)-CH₂ |
| 815. | OCF₃ | C₂H₅-O-C(O)-CH₂ |
| 816. | OCF₃ | CH₃-O-C(O)-CH(CH₃)- |
| 817. | OCF₃ | C₂H₅-O-C(O)-CH(CH₃)- |
| 818. | OCF₃ | (CH₃O)₂CH-CH₂- |
| 819. | OCF₃ | (C₂H₅O)₂CH-CH₂- |
| 820. | OCClF₂ | H |
| 821. | OCClF₂ | CH₃ |
| 822. | OCClF₂ | CH₃CH₂- |
| 823. | OCClF₂ | (CH₃)₂CH- |
| 824. | OCClF₂ | CH₃CH₂CH₂- |
| 825. | OCClF₂ | n-C₄H₉ |
| 826. | OCClF₂ | (CH₃)₃C- |
| 827. | OCClF₂ | (CH₃)₂CH -CH₂- |
| 828. | OCClF₂ | n-C₅H₁₁ |
| 829. | OCClF₂ | (CH₃)₂CH-CH₂-CH₂- |
| 830. | OCClF₂ | (C₂H₅)₂-CH- |
| 831. | OCClF₂ | (CH₃)₃C-CH₂- |
| 832. | OCClF₂ | (CH₃)₃C-CH₂-CH₂- |
| 833. | OCClF₂ | C₂H₅CH(CH₃)-CH₂- |
| 834. | OCClF₂ | CH₃-CH₂-C(CH₃)₂- |
| 835. | OCClF₂ | (CH₃)₂CH-CH(CH₃)- |
| 836. | OCClF₂ | (CH₃)₃C-CH(CH₃)- |
| 837. | OCClF₂ | (CH₃)₂CH-CH₂-CH(CH₃)- |
| 838. | OCClF₂ | CH₃CH₂-C(CH₃)(C₂H₅)- |
| 839. | OCClF₂ | CH₃-CH₂-CH₂-C(CH₃)₂- |
| 840. | OCClF₂ | C₂H₅-CH₂-CH(CH₃)-CH₂- |
| 841. | OCClF₂ | cyclopropyl |
| 842. | OCClF₂ | cyclopropyl-CH₂- |
| 843. | OCClF₂ | cyclopropyl-CH(CH₃)- |
| 844. | OCClF₂ | cyclobutyl |
| 845. | OCClF₂ | cyclopentyl |
| 846. | OCClF₂ | cyclohexyl |
| 847. | OCClF₂ | HC≡C-CH₂- |
| 848. | OCClF₂ | HC≡C-CH(CH₃)- |
| 849. | OCClF₂ | HC≡C-C(CH₃)₂- |
| 850. | OCClF₂ | HC≡C-C(CH₃)(C₂H₅)- |
| 851. | OCClF₂ | HC≡C-C(CH₃)(C₃H₇)- |
| 852. | OCClF₂ | CH₂-CH-CH₂- |
| 853. | OCClF₂ | H₂C=CH-CH(CH₃) - |
| 854. | OCClF₂ | H₂C=CH-C(CH₃)₂- |
| 855. | OCClF₂ | H₂C=CH-C(C₂H₅)(CH₃) - |
| 856. | OCClF₂ | C₆H₅-CH₂- |
| 857. | OCClF₂ | 4-(CH₃)₃C-C₆H₄-CH₂- |
| 858. | OCClF₂ | C₆H₅-CH₂- |
| 859. | OCClF₂ | 4-(CH₃)₃C-C₆H₄-CH₂- |
| 860. | OCClF₂ | 4-Cl-C₆H₄-CH₂- |
| 861. | OCClF₂ | 3-(CH₃O)-C₆H₄-CH₂- |
| 862. | OCClF₂ | 4-(CH₃O)-C₆H₄-CH₂- |
| 863. | OCClF₂ | 2-(CH₃O)-C₆H₄-CH₂- |
| 864. | OCClF₂ | 3-Cl-C₆H₄-CH₂- |
| 865. | OCClF₂ | 2-Cl-C₆H₄-CH₂- |
| 866. | OCClF₂ | 4-(F₃C)-C₆H₄-CH₂- |
| 867. | OCClF₂ | NC-CH₂- |
| 868. | OCClF₂ | NC-CH₂-CH₂- |
| 869. | OCClF₂ | NC-CH₂-CH(CH₃)- |
| 870. | OCClF₂ | NC-CH₂-C(CH₃)₂- |
| 871. | OCClF₂ | NC-CH₂-CH₂-CH₂- |
| 872. | OCClF₂ | FH₂C-CH₂- |
| 873. | OCClF₂ | ClH₂C-CH₂- |
| 874. | OCClF₂ | BrH₂C-CH₂- |
| 875. | OCClF₂ | FH₂C-CH(CH₃)- |
| 876. | OCClF₂ | ClH₂C-CH(CH₃)- |
| 877. | OCClF₂ | BrH₂C-CH(CH₃)- |
| 878. | OCClF₂ | F₂HC-CH₂- |
| 879. | OCClF₂ | F₃C-CH₂- |
| 880. | OCClF₂ | FH₂C-CH₂-CH₂- |
| 881. | OCClF₂ | ClH₂C-CH₂-CH₂- |
| 882. | OCClF₂ | BrH₂C-CH₂-CH₂- |
| 883. | OCClF₂ | F₂HC-CH₂-CH₂- |
| 884. | OCClF₂ | F₃C-CH₂-CH₂- |
| 885. | OCClF₂ | CH₃-O-CH₂-CH₂- |
| 886. | OCClF₂ | CH₃-S-CH₂-CH₂- |
| 887. | OCClF₂ | CH₃-SO₂-CH₂-CH₂- |
| 888. | OCClF₂ | C₂H₅-O-CH₂-CH₂- |
| 889. | OCClF₂ | (CH₃)₂CH-O-CH₂-CH₂- |
| 890. | OCClF₂ | C₂ H₅-S-CH₂-CH₂- |
| 891. | OCClF₂ | C₂H₅SO₂-CH₂-CH₂- |
| 892. | OCClF₂ | (CH₃)₂N-CH₂-CH₂- |
| 893. | OCClF₂ | (C₂H₅)₂N-CH₂-CH₂- |
| 894. | OCClF₂ | [(CH₃)₂CH]₂N-CHᵣCH₂- |
| 895. | OCClF₂ | CH₃-O-CH₂-CH(CH₃)- |
| 896. | OCClF₂ | CH₃-S-CH₂-CH(CH₃)- |
| 897. | OCClF₂ | CH₃-SO₂-CH₂-CH(CH₃)- |
| 898. | OCClF₂ | C₂H₅-O-CH₂-CH(CH₃)- |
| 899. | OCClF₂ | C₂H₅-S-CH₂-CH(CH₃)- |
| 900. | OCClF₂ | C₂H₅-SO₂-CH₂-CH(CH₃)- |
| 901. | OCClF₂ | (CH₃)₂N-CH₂-CH(CH₃)- |
| 902. | OCClF₂ | (C₂H₅)₂N-CH₂-CH(CH₃)- |
| 903. | OCClF₂ | [(CH₃)₂CH]₂N-CH₂-CH(CH₃)- |
| 904. | OCClF₂ | CH₃-O-CH(CH₃)-CH₂- |
| 905. | OCClF₂ | CH₃-S-CH(CH₃)-CH₂- |
| 906. | OCClF₂ | CH₃-SO₂-CH(CH₃)-CH₂- |
| 907. | OCClF₂ | C₂H₅-O-CH(CH₃)-CH₂- |
| 908. | OCClF₂ | C₂H₅-S-CH(CH₃)-CH₂- |
| 909. | OCClF₂ | C₂H₅-SO₂-CH(CH₃)-CH₂- |
| 910. | OCClF₂ | (CH₃)-N-CH(CH₃)-CH₂- |
| 911. | OCClF₂ | (C₂H₅)₂-N-CH(CH₃)-CH₂- |
| 912. | OCClF₂ | [(CH₃)₂CH]₂N-CH(CH₃)-CH₂- |
| 913. | OCClF₂ | CH₃-O-CH₂-CH₂-CH₂- |
| 914. | OCClF₂ | CH₃-S-CH₂-CH₂-CH₂- |
| 915. | OCClF₂ | CH₃-SO₂-CH₂-CH₂-CH₂- |
| 916. | OCClF₂ | C₂H₅-O-CH₂-CH₂-CH₂- |
| 917. | OCClF₂ | C₂H₅-S-CH₂-CH₂-CH₂- |
| 918. | OCClF₂ | C₂H₅-SO₂-CH₂-CH₂-CH₂- |
| 919. | OCClF₂ | (CH₃)₂N-CH₂-CH₂-CH₂- |
| 920. | OCClF₂ | (C₂H₅)₂N-CH₂-CH₂-CH₂- |
| 921. | OCClF₂ | CH₃-O-CH₂-C(CH₃)₂- |
| 922. | OCClF₂ | CH₃-S-CH₂-C(CH₃)₂- |
| 923. | OCClF₂ | CH₃-SO₂-CH₂-C(CH₃)₂- |
| 924. | OCClF₂ | C₂H₅-O-CH₂-C(CH₃)₂- |
| 925. | OCClF₂ | C₂H₅-S-CH₂-C(CH₃)₂- |
| 926. | OCClF₂ | C₂H₅-SO₂-CH₂-C(CH₃)₂- |
| 927. | OCClF₂ | (CH₃)₂N-CH₂-C(CH₃)₂- |
| 928. | OCClF₂ | (C₂H₅)₂N-CH₂-C(CH₃)₂- |
| 929. | OCClF₂ | [(CH₃)₂CH]₂N-CH₂-C(CH₃)₂- |
| 930. | OCClF₂ | Cl-CH₂-C≡C-CH₂- |
| 931. | OCClF₂ | CH₃-O-C(O)-CH₂ |
| 932. | OCClF₂ | C₂H₅-O-C(O)-CH₂ |
| 933. | OCClF₂ | CH₃-O-C(O)-CH(CH₃)- |
| 934. | OCClF₂ | C₂H₅-O-C(O)-CH(CH₃)- |
| 935. | OCClF₂ | (CH₃O)₂CH-CH₂- |
| 936. | OCClF₂ | (C₂H₅O)₂CH-CH₂- |

Folgende Verbindungen der Formel (I), welche gegebenenfalls in deren isomeren Formeln (I-A) und (I-B) vorliegen können, sind aus den eingangs zitierten Veröffentlichungen explizit bekannt, 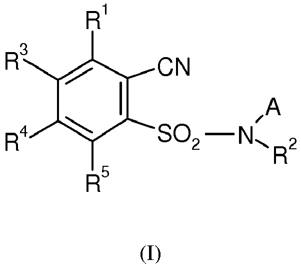 wobei R¹, R², R³, R⁵ die in der Tabelle B angegebene Bedeutung haben und R⁴ und A Wasserstoff bedeuten.

**Tabelle B:**

| Beispiel Nr. | R³ | R⁵ | R¹ | R² | m.p.[°C] |
|---|---|---|---|---|---|
| 1 | H | H | CH₃ | n-CH₂CH₂CH₃ | 74-77 |
| 2 | H | H | OCH₃ | -CH₃ | 121-128 |
| 3 | Cl | H | CH₃ | -CH₂CH₃ | 85-90 |
| 4 | CN | CH₃ | CH₃ | -CH₃ | 178-180 |
| 5 | Br | H | CH₃ | -CH₂CH₃ | 112-114 |
| 6 | Br | H | CH₃ | cyclopropyl | 140-142 |
| 7 | Br | H | CH₃ | n-C₄H₉ | 112-116 |
| 8 | Br | H | CH₃ | -CH(CH₃)₂ | 102-103 |
| 9 | Br | H | CH₃ | n-CH₂CH₂CH₃ | 119-120 |
| 10 | Br | H | CH₃ | C₆H₅-CH₂- | 139-140 |
| 11 | Br | H | CH₃ | 4-(CH₃)₃C-C₆H₄-CH₂- | 147-151 |
| 12 | H | H | CH₃ | C₆H₅-CH₂- | 117-119 |
| 13 | H | H | CH₃ | 4-(CH₃)₃C-C₆H₄-CH₂- | 97-103 |
| 14 | H | H | CH₃ | 4-Cl-C₆H₄-CH₂- | 150-151 |
| 15 | Br | H | CH₃ | 3-(CH₃O)-C₆H₄-CH₂- | 123-125 |
| 16 | H | H | CH₃ | 3-(CH₃O)-C₆H₄-CH₂- | 117-122 |
| 17 | Br | H | CH₃ | 4-(CH₃O)-C₆H₄-CH₂- | 156-161 |
| 18 | H | H | CH₃ | 4-(CH₃O)-C₆H₄-CH₂- | 127-132 |
| 19 | Br | H | CH₃ | 2-(CH₃O)-C₆H₄-CH₂- | 103-108 |
| 20 | H | H | CH₃ | 2-(CH₃O)-C₆H₄-CH₂- | 127-130 |
| 21 | Br | H | CH₃ | 4-Cl-C₆H₄-CH₂- | 127-131 |
| 22 | Br | H | CH₃ | 3-Cl-C₆H₄-CH₂- | 102-108 |
| 23 | H | H | CH₃ | 3-Cl-C₆H₄-CH₂- | 118-125 |
| 24 | Br | H | CH₃ | 2-Cl-C₆H₄-CH₂- | 118-125 |
| 25 | H | H | CH₃ | 2-Cl-C₆H₄-CH₂- | 128-131 |
| 26 | Br | H | CH₃ | 4-(F₃C)-C₆H₄-CH₂- | 153-155 |
| 27 | H | H | CH₃ | 4-(F₃C)-C₆H₄-CH₂- | 135-137 |
| 28 | Br | H | CH₃ | cyclopropyl-CH₂- | 106-110 |
| 29 | H | H | CH₃ | -CH₃ | 83-89 |
| 30 | H | H | CH₃ | -CH₂CH₃ | 98-103 |
| 31 | H | H | CH₃ | prop-2-ynyl | 104-107 |
| 32 | Br | H | CH₃ | -CH₂-CN | 106-110 |
| 33 | H | H | CH₃ | cyclopropyl-CH₂- | 89-93 |
| 34 | H | H | CH₃ | -CH₂-CN | 130-134 |
| 35 | Br | H | CH₃ | prop-2-ynyl | ¹H-NMR |
| 36 | Br | H | CH₃ | (CH₃)₃C-CH₂- | 112-114 |
| 37 | H | H | CH₃ | (CH₃)₃C-CH₂- | 86-93 |
| 38 | H | H | CH₃ | CH₂=CHCH₂- | ¹H-NMR |
| 39 | H | H | OCH₃ | -CH₂CH₃ | 121-126 |
| 40 | H | H | OCH₃ | C₆H₅-CH₂- | 108-119 |
| 41 | H | H | OCH₃ | -CH(CH₃)₂ | 104-113 |
| 42 | H | H | OCH₃ | prop-2-ynyl | 122-138 |
| 43 | H | H | OCH3 | -CH₂-CN | ¹H-NMR |
| 44 | H | H | OCH3 | CH₂=CHCH₂- | ¹H-NMR |
| 45 | H | H | OCH₃ | H | 186-198 |
| 46 | Cl | H | CH₃ | -CH₃ | 112-122 |
| 47 | Cl | H | CH₃ | H | 160-162 |
| 48 | H | H | OCH₂CH₃ | -CH₃ | 91-95 |
| 49 | H | H | OCH₂CH₃ | -CH₂CH₃ | 111-113 |
| 50 | H | H | OCH₂CH₃ | H | 183-186 |
| 51 | Cl | H | CH₃ | C₆H₅-CH₂- | 132-135 |
| 52 | Cl | H | CH₃ | -CH(CH₃)₂ | 86-94 |
| 53 | Cl | H | CH₃ | prop-2-ynyl | ¹H-NMR |
| 54 | Cl | H | CH₃ | H₂C=CHCH₂- | 95-96 |
| 55 | Cl | H | CH₃ | FH₂CCH₂- | 115-121 |
| 56 | H | H | OCH₂CH₃ | C₆H₅-CH₂- | Öl |
| 57 | H | H | OCH₂CH₃ | prop-2-ynyl | 105-112 |
| 58 | H | H | OCH₂CH₃ | -CH₂-CN | 129-134 |
| 59 | H | H | OCH₂H₃ | CH₂=CHCH₂- | Öl |
| 60 | H | H | OCH₂CH₃ | -CH₂-CH₂-CH₃ | 113-115 |
| 61 | H | H | OCH₂CH₃ | cyclopropyl-CH₂ | 128-130 |
| 62 | Cl | H | CH₃ | -CH₂-CN | 134-138 |
| 63 | H | H | OCH₂CH₃ | -CH₂-CF₃ | Öl |
| 64 | H | H | OCH₂CH=CH₂ | -CH₂-CH₃ | Öl |
| 65 | H | H | OCH(CH₃)₂ | -CH₂-CH₃ | Öl |
| 66 | H | H | OCHF₂ | -CH₂-CH₃ | 98-100 |
| 67 | H | H | OCH(CH₃)₂ | H | 132-136 |
| 68 | H | H | OCH(CH₃)₂ | prop-2-ynyl | Öl |
| 69 | H | H | OCH(CH₃)₂ | -CH₂CN | Öl |
| 70 | H | H | OCH(CH₃)₂ | cyclopropyl | Öl |
| 71 | H | H | OCH(CH₃)₂ | -CH(CH₃)₂ | Öl |
| 72 | H | H | OCH(CH₃)₂ | C₆H₅-CH₂- | Öl |
| 73 | H | H | OCH(CH₃)₂ | -CH₂-CH₃ | Öl |
| 74 | Br | H | CH₃ | H | 149-151 |
| 75 | H | H | CH₃ | H | 171-174 |
| 76 | H | H | OCH(CH₃)₂ | O-CH₂-CH₃ | Öl |
| 77 | H | H | OCH(CH₃)₂ | -CH₂-CH₂-CH₃ | Öl |
| 78 | H | H | OCHF₂ | H | 135-137 |
| 79 | H | H | OCHF₂ | -CH₂-C≡CH | 65-70 |
| 80 | H | H | OCH₂CHClCH₂Cl | H | 123-129 |
| 81 | H | H | OCH(CH₃)₂ | -CH₃ | 82-91 |
| 82 | H | H | OCH₃ | -CH₂-c-C₃H₅ | 92-95 |
| 83 | H | H | OCH₃ | -c-C₃H₅ | 142-148 |
| 84 | H | H | OCH₃ | -O-CH₂CH₃ | 138-143 |
| 85 | H | H | OCH₃ | -CH₂-CH₂-CN | 123-130 |
| 86 | H | H | OCH₃ | -CH₂-CH₂-S-CH₃ | Öl |
| 87 | H | H | OCH₃ | -CH₂-CH₂-S(O)₂-CH₃ | 157-160 |
| 88 | H | H | OCH₃ | -CH₂-CH₂F | 134-140 |
| 89 | H | H | OCHF₂ | H | 122-128 |
| 90 | H | H | OCH₃ | -CH₂-CF₃ | 136-141 |
| 91 | H | H | OCH₃ | -CH₂-CHF₂ | 116-118 |
| 92 | H | H | OCH₃ | -O-CH₃ | 136-139 |
| 93 | Br | H | OCH₃ | -CH₂-C≡CH | 110-115 |
| 94 | H | H | OCH₃ | -CH₂-CH₂-N(CH₃)₂ | 94-97 |
| 95 | Br | H | OCH₃ | -CH₂-C₆H₅ | 134-136 |
| 96 | H | H | OCHF₂ | -CH₂-CF₃ | 120-138 |
| 97 | H | H | OCHF₂ | -CH₂-C₆H₅ | 115-117 |
| 98 | H | H | OCHF₂ | -c-C₃H₅ | 87-91 |
| 99 | H | H | OCHF₂ | -CH₂-CH₂-S-CH₃ | ¹H-NMR |
| 100 | Br | H | OCHF₂ | -CH₃ | 168-173 |
| 101 | H | H | OCHF₂ | -CH₂-CH=CH₂ | 75-78 |
| 102 | H | H | OCHF₂ | -CH₂-C-C₃H₅ | ¹H-NMR |
| 103 | H | H | OCHF₂ | -CH₂-CH₂-CH₃ | 54-58 |
| 104 | H | H | OCHF₂ | -CH₂-CH₂-O-CH₃ | 'H-NMR |
| 105 | H | H | OCHF₂ | -CH₂-CH₂-CN | 83-88 |
| 106 | H | H | OCHF₂ | -CH-(CH₃)₂ | 72-74 |
| 107 | H | H | OCHF₂ | -CH₂-CHF₂ | 92-96 |
| 108 | H | H | OCHF₂ | -O-CH₃ | Öl |
| 109 | H | H | CF₃ | -CH₂-CH₃ | 81-86 |
| 110 | H | H | CF₃ | -CH₂-C≡CH | 106-111 |
| 111 | H | H | CF₃ | -CH₂-C₆H₅ | 106-108 |
| 112 | H | H | CF₃ | -CH₃ | 104-113 |
| 113 | H | H | CF₃ | -CH₂-CH=CH₂ | 71-73 |
| 114 | H | H | CF₃ | -CH-(CH₃)₂ | 65-67 |
| 115 | H | H | CF₃ | -CH₂-CH₂-CH₃ | 62-66 |
| 116 | H | H | CF₃ | -CH₂-c-C₃H₅ | Öl |
| 117 | H | H | CF₃ | -CH₂-CF₃ | Öl |
| 118 | H | H | CF₃ | -CH₂-CH₂-S-CH₃ | Öl |
| 119 | H | H | CF₃ | -c-C₃H₅ | 94-96 |
| 120 | H | H | CF₃ | -O-CH₂-CH₃ | 118-120 |
| 121 | H | H | CF₃ | -CH₂-CH₂-SO₂-CH₃ | 169-171 |
| 122 | H | H | CH₃ | -O-CH₂-CH₃ | 118-121 |
| 123 | H | H | CH₃ | -O-CH₃ | 136-140 |
| 124 | H | H | CH₃ | -cyclobutyl | HPLC/MS |
| 125 | H | H | CH₃ | -cyclopentyl | HPLC/MS |
| 126 | H | H | CH₃ | -cyclohexyl | HPLC/MS |
| 127 | H | H | CH₃ | -cyclopropyl | HPLC/MS |
| 128 | H | H | CH₃ | -C(CH₃)₂-CH₂-CH₃ | HPLC/MS |
| 129 | H | H | CH₃ | -CH₂-CH₂-CH₂-N(C₂H₅)₂ | HPLC/MS |
| 130 | H | H | CH₃ | -CH(CH₃)-CH(CH₃)₂ | HPLC/MS |
| 131 | H | H | CH₃ | -CH(CH₃)-C(CH₃)₃ | HPLC/MS |
| 132 | H | H | CH₃ | -C(CH₃)₃ | HPLC/MS |
| 133 | H | H | CH₃ | -C(CH₃)(C₂H₅)-CH₂-CH₃ | HPLC/MS |
| 134 | H | H | CH₃ | -C(CH₃)₂-CH₂-CH₂-CH₃ | HPLC/MS |
| 135 | H | H | CH₃ | -CH₂-CH₂-N[CH(CH₃)₂]₂ | HPLC/MS |
| 136 | H | H | CH₃ | -CH₂-CH₂-O-C₂H₅ | HPLC/MS |
| 137 | H | H | CH₃ | -CH(C₂H₅)₂ | HPLC/MS |
| 138 | H | H | CH₃ | -CH(CH₃)-CH₂-CH(CH₃)₂ | HPLC/MS |
| 139 | H | H | CH₃ | -CH(C₂H₅)-CH₂-O-CH₃ | HPLC/MS |
| 140 | H | H | CH₃ | -C(CH₃)₂-C≡CH | HPLC/MS |
| 141 | H | H | CH₃ | -CH(CH₃)-CH₂-O-C₂H₅ | HPLC/MS |
| 142 | H | H | CH₃ | CH(CH₃)-CH₂-O-CH₃ | HPLC/MS |
| 143 | H | H | CH₃ | -CH₂-CH(CH₃)-C₂H₅ | HPLC/MS |
| 144 | H | H | CH₃ | -CH(CH₃)-CH₂-S-CH₃ | HPLC/MS |
| 145 | H | H | CH₃ | -CH₂-CH(OCH₃)₂ | ¹H-NMR |
| 146 | H | H | CH₃ | -CH₂-CH₂-C(CH₃)₃ | HPLC/MS |
| 147 | H | H | CH₃ | -CH₂-CH(OC₂H₅)₂ | HPLC/MS |
| 148 | H | H | CH₃ | -CH₂-CH₂-S-CH₃ | HPLC/MS |
| 149 | H | H | CH₃ | -CH₂-CH(CH₃)₂ | HPLC/MS |
| 150 | H | H | CH₃ | -CH₂-CH₂-CH(CH₃)₂ | HPLC/MS |
| 151 | H | H | CH₃ | -CH₂-CH₂-CH₂-O-CH₃ | HPLC/MS |
| 152 | H | H | CH₃ | -CH₂-CH(CH₃)-O-CH₃ | HPLC/MS |
| 153 | H | H | CH₃ | -CH₂-CH(CH₃)-CH₂C₂H₅ | HPLC/MS |
| 154 | H | H | CH₃ | -CH₂-CH₂-CH₂-S-CH₃ | HPLC/MS |
| 155 | H | H | CH₃ | -C(CH₃)₂-CH₂-S-C₂H₅ | HPLC/MS |
| 156 | H | IH | CH₃ | -C(CH₃)₂-CH₂-S-CH₃ | HPLC/MS |
| 157 | H | H | CH₃ | -CH(CH₃)-CH₂-N(CH₃)₂ | HPLC/MS |
| 158 | H | H | CH₃ | -C(CH₃)(n-C₃H₇)₂-C≡CH | HPLC/MS |
| 159 | H | H | CH₃ | -C(CH₃)₂-CH=CH₂ | HPLC/MS |
| 160 | H | H | CH₃ | -CH(CH₃)-C(O)-O-CH₃ | HPLC/MS |
| 161 | H | H | CH₃ | -CH(CH₃)-c-C₃H₅ | HPLC/MS |
| 162 | H | H | CH₃ | -CH₂-CF₃ | HPLC/MS |
| 163 | H | H | CH₃ | -CH₂-CH₂-O-CH₃ | HPLC/MS |
| 164 | H | H | CH₃ | -CH(CH₃)-C₂H₅ | HPLC/MS |
| 165 | H | H | CH₃ | CH(CH₃)₂ | HPLC/MS |
| 166 | H | H | CH₃ | -C(CH₃)₂-CH₂-CN | HPLC/MS |
| 167 | H | H | CH₃ | -CH₂-CH₂-CH₂-N(CH₃)₂ | HPLC/MS |
| 168 | H | H | CH₃ | -CH₂CH₂CH₂CH₂CH₃ | HPLC/MS |
| 169 | H | H | CH₃ | -CH₂-CH₂-F | HPLC/MS |
| 170 | H | H | CH₃ | -CH₂-CH₂-CH₂-O-C₂H₅ | HPLC/MS |
| 171 | H | H | CH₃ | -CH₂-CH₂-O-CH(CH₃)₂ | HPLC/MS |
| 172 | H | H | CH₃ | -CH(CH₃)-CH₂-Cl | HPLC/MS |
| 173 | H | H | CH₃ | -CH2-CH2-CH2-Cl | HPLC/MS |
| 174 | H | H | CH₃ | -CH₂-C≡C-CH₂-Cl | HPLC/MS |
| 175 | H | H | CH₃ | -CH₂-C(O)-O-CH₃ | HPLC/MS |
| 176 | H | H | CH₃ | -CH₂-CH₂-CH₂-Br | HPLC/MS |
| 177 | H | H | CH₃ | -CH₂-CH₂-CH₂-CH₃ | HPLC/MS |
| 178 | H | H | CH₃ | -CH₂-CH₂-S-C₂H₅ | HPLC/MS |
| 179 | CN | H | CH₃ | -CH₂-CH₃ | 114-119 |
| 180 | CN | H | CH₃ | -CH₃ | 172-175 |
| 181 | CN | H | CH₃ | -CH₂-C≡CH | 95-105 |
| 182 | CN | H | CH₃ | H | Öl |
| 183 | CN | H | CH₃ | -CH₂-CH=CH₂ | 83-95 |
| 184 | CN | H | CH₃ | -CH₂-CH₂-CH₃ | 95-99 |
| 185 | CN | H | CH₃ | -CH₂-CH₂-F | Öl |
| 186 | CN | H | CH₃ | -cyclopropyl | Öl |
| 187 | CN | H | CH₃ | -O-CH₃ | 139-142 |
| 188 | OCH₃ | H | CH₃ | -CH₂-CH₃ | 171-174 |
| 189 | OCH₃ | H | CH₃ | -CH₂-C≡CH | 151-155 |
| 190 | OCH₃ | H | CH₃ | -H | 171-180 |
| 191 | OCH₃ | H | CH₃ | -CH₃ | 171-175 |
| 192 | H | Cl | CH₃ | CH₂CH₃ | 119-123 |
| 193 | H | Br | CH₃ | CH₂CH₃ | 141-144 |

Dabei bedeuten
m..p.: Schmelzpunkt
c-C₃H₅: cyclopropyl;
n-C₃H₇: n-propyl

Desweiteren sind folgende Verbindungen der Formel (I), aus den eingangs zitierten Veröffentlichungen explizit bekannt, 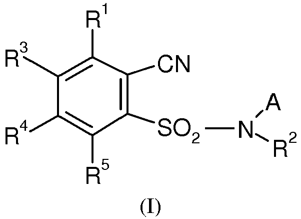 wobei A, R¹, R², R³, R⁵ die in der Tabelle C angegebene Bedeutung haben und R⁴ Wasserstoff bedeutet.

**Tabelle C:**

| Beispiel Nr. | A | R² | R¹ | R³ | R⁵ | m.p. [°C] |
|---|---|---|---|---|---|---|
| 194 | C₂H₅ | C₂H₅ | OCH₃ | H | H | 77-83 |
| 195 | CH₂CH=CH₂ | CH₂CH=CH₂ | OCH₃ | H | H | 60-73 |
| 196 | CH₃ | CH₃ | OCH₃ | Br | H | 75-80 |
| 197 | CH₃ | CH₃ | OCH₃ | H | NO₂ | Öl |
| 198 | CH₃ | C₂H₅ | OCHF₂ | H | H | Öl |
| 199 | CH₃ | CH₃ | OCH₃ | H | NH₂ | Öl |
| 200 | C₂H₅ | C₂H₅ | OCHF₂ | H | H | Öl |
| 201 | CH₃ | CH₃ | OC₂H₅ | H | H | 86-94 |
| 202 | C₂H₅ | C₂H₅ | OC₂H₅ | H | H | Öl |
| 203 | CH₃ | CH₃ | OCH(CH₃)₂ | H | H | Öl |
| 204 | CH₃ | CH₃ | OCH₂CHClCH₂Cl | H | H | Öl |
| 205 | CH₃ | CH₃ | OCF₂-Cl | H | H | 83-85 |
| 206 | CH₃ | CH₃ | OCF₃ | H | H | 95-98 |
| 207 | CH₃ | C₂H₅ | OCF₃ | H | H | Öl |
| 208 | C₂H₅ | C₂H₅ | OCF₃ | H | H | Öl |
| 209 | CH₃ | C₂H₅ | OCF₂Cl | H | H | Öl |
| 210 | C₂H₅ | C₂H₅ | OCF₂Cl | H | H | Öl |
| 211 | CH₃ | CH₃ | OCH₃ | H | CH₃ | 89-93 |
| 212 | CH₃ | GH₃ | OCH₃ | H | C₂H₅ | 138-140 |
| 213 | CH₃ | CH₃ | OCH₃ | H | CH₃OCO | 134-138 |
| 214 | CH₃ | CH₃ | OCH₃ | H | Cl | LC/MS |
| 215 | CH₃ | CH₃ | OCH₃ | H | H | ¹H-NMR |
| 216 | CH₃ | C₂H₅ | OCF₂-CHFCl | H | H | ¹H-NMR |
| 217 | CH₃ | CH₃ | OCH₃ | H | F | 123-125 |
| 218 | CH₃ | C₂H₅ | OCH₃ | H | F | ¹H-NMR |
| 219 | CH₃ | CH(CH₃)₂ | OCH₃ | H | F | ¹H-NMR |
| 220 | CH₃ | CH₂C≡CH | OCH₃ | H | F | ¹H-NMR |
| 221 | CH₃ | CH₃ | OCH₃ | OCH₃ | H | ¹H-NMR |
| 222 | CH₃ | CH₃ | OCHF₂ | H | F | 102-105 |
| 223 | CH₃ | CH₃ | OCH₃ | Cl | Br | 93-98 |
| 224 | CH₃ | CH₃ | OCH₃ | F | H | ¹H-NMR |
| 225 | CH₃ | CH₂-CH=CH₂ | OCH₃ | H | H | |

Dabei bedeutet
m.p. = Schmelzpunkt.

Einige der in Tabelle B und C aufgeführten Verbindungen sind mittels ¹H NMR oder mittels LC-MS charakterisiert. Die Ergebnisse sind in WO 2005/035486 und WO 2006/056433 aufgeführt. Hiermit wird explizit auf den Inhalt dieser Veröffentlichung Bezug genommen.

Des Weiteren ist folgende Verbindung der Formel (1-226) und ihre isomeren Formen 1-226-A und 1-226-B aus den eingangs zitierten Veröffentlichungen ebenfalls explizit bekannt,

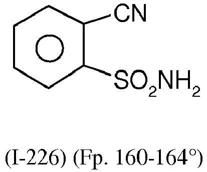

Die Beispiele 225 und 42-A sind mittels ¹H NMR charakterisiert. Die Signale sind definiert durch eine chemische Verschiebung (in ppm) gegenüber Tetramethylsilan, durch ihre Multiplizität und ihr Integral, wobei die dazu korrespondierende Anzahl Wasserstoffatome jeweils in der Klammer angegeben ist. Dabei bedeutet m Mulitplett, t Triplett, d Dublett und s Singlett. Die Ergebnisse sind im folgenden aufgeführt:
Bsp. 225:
   ¹H-NMR (400 mHz, d₆-DMSO: δ = 2.77 ppm (s, 3H, NCH₃); 3.82-3.81 ppm (d, 2H, N-CH₂); 4.00 ppm (s, 3H, OCH₃); 5.19-5.27 ppm (m, 2H, CH=CH₂); 5.68-5.78 ppm (m, 1H, CH=CH₂); 7.56-7.58 ppm (2H, CH); 7.83-7.87 ppm (1H, CH).
Bsp. 42-A:
   ¹H-NMR (400 mHz, d₆-DMSO: δ = 9.20 ppm (1H, =NH); 7.91-7.88 (1H, CH); 7.73-7.71 ppm (1H, CH); 7.61-7.60 (1H, CH); 4.52 ppm (2H, N-CH₂); 4.07 ppm (3H, O-CH₃); 3.28 ppm(t, 1H, C≡CH).

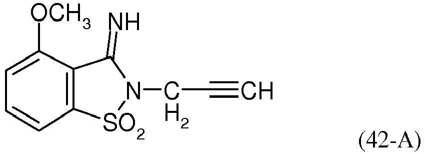

### Beispiel A: Wirkungssteigerung durch Ammoniumsalze

### Myzus persicae -Test (MYZUPE)

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Bei erforderlicher Zugabe von Ammoniumsalzen werden diese in einer Konzentration von 1000 ppm nach dem Verdünnen jeweils der fertigen Präparatelösung zupipettiert.

Paprikapflanzen *(Capsicum annuum),* die stark von der Grünen Pfirsichblattlaus *(Myzus persicae)* befallen sind, werden durch Sprühen mit der Wirkstoffzubereitung in der gewünschten Konzentration behandelt.

Nach der gewünschten Zeit wird die Abtötung in % bestimmt. Dabei bedeutet 100 %, dass alle Tiere abgetötet wurden; 0 % bedeutet, dass keine Tiere abgetötet wurden.

**Tabelle A**

| Wirkstoff | Wirkstoff ppm | Abtötungsgrad / % nach 6 Tagen | |
|---|---|---|---|
| | | a.i. | + AS (1000 ppm) |
| 42 | 20 | 5 | 20 |
| 42-A | 20 | 0 | 45 |
| 45-B* | 4 | 35 | 60 |

| | | | |
|---|---|---|---|
| AS = Ammoniumsulfat * bekannt aus EP 33984, Bsp. 33 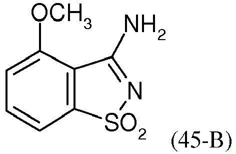 | | | |

### Beispiel B: Wirkungssteigerung durch Ammoniumsalze

### Aphis gossypii -Test (APHIGO)

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Bei erforderlicher Zugabe von Ammoniumsalzen werden diese in einer Konzentration von 1000 ppm nach dem Verdünnen jeweils der fertigen Präparatelösung zupipettiert.

Baumwollblätter *(Gossypium hirsutum*), die stark von der Baumwollblattlaus *(Aphis gossypii)* befallen sind, werden mit einer Wirkstoffzubereitung mit der gewünschten Konzentration gespritzt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

**Tabelle B**

| Wirkstoff | Wirkstoff ppm | Abtötungsgrad / % nach 6 Tagen | |
|---|---|---|---|
| | | a.i. | + AS (1000 ppm) |
| 42-A | 20 | 30 | 98 |
| 42-A | 4 | 15 | 55 |
| 44 | 4 | 5 | 25 |
| 225 | 20 | 35 | 75 |

| | | | |
|---|---|---|---|
| AS = Ammoniumsulfat | | | |

### Beispiel C: Wirkungssteigerung durch Ammoniumsalze in Kombination mit Penetrationsförderern

### Myzus persicae -Test (MYZUPE)

| | | |
|---|---|---|
| Lösungsmittel: | 7 | Gewichtsteile Dimethylformamid |
| Emulgator: | 2 (Tabelle C1) / 1(Tabelle C2) | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Bei erforderlicher Zugabe von Ammoniumsalzen, Penetrationsförderer oder Ammoniumsalzen und Penetrationsförderer werden diese in einer Konzentration von 1000 ppm nach dem Verdünnen jeweils der fertigen Präparatelösung zupipettiert.

Paprikapflanzen *(Capsicum annuum*), die stark von der Grünen Pfirsichblattlaus *(Myzus persicae)* befallen sind, werden durch Sprühen mit der Wirkstoffzubereitung in der gewünschten Konzentration behandelt.

Nach der gewünschten Zeit wird die Abtötung in % bestimmt. Dabei bedeutet 100 %, dass alle Tiere abgetötet wurden; 0 % bedeutet, dass keine Tiere abgetötet wurden.

**Tabelle C1**

| Wirkstoff | Wirkstoff ppm | Abtötungsgrad / % nach 6 Tagen | | | |
|---|---|---|---|---|---|
| | | a.i. | + AS (1000 ppm) | + RME (1000 ppm) | + RME + AS (je 1000 ppm) |
| 42 | 100 | 75 | 80 | 99 | 100 |
| 42 | 20 | 5 | 20 | 25 | 70 |
| 42-A | 20 | 0 | 45 | 90 | 98 |
| 226 | 20 | 10 | 10 | 25 | 50 |
| 44 | 20 | 85 | 70 | 85 | 98 |
| 44 | 4 | 10 | 15 | 20 | 30 |
| 225 | 4 | 0 | 0 | 5 | 35 |

| | | | | | |
|---|---|---|---|---|---|
| RME = Rapsölmethylester (formuliert als 500 EW, Konzentrationsangabe in g Wirkstoff /1) AS = Ammoniumsulfat | | | | | |

**Tabelle C2**

| Wirkstoff | Wirkstoff g/ha | Abtötungsgrad / % nach 7 Tagen | | | |
|---|---|---|---|---|---|
| | | a.i. | + AS (1000 ppm) | + RME (1000 ppm) | + RME + AS (je 1000 ppm) |
| 83 | 60 | 0 | 0 | 10 | 75 |
| 215 | 60 | 0 | 20 | 40 | 75 |
| 40 | 60 | 0 | 0 | 40 | 50 |

| | | | | | |
|---|---|---|---|---|---|
| AS = Ammoniumsulfat RME = Rapsölmethylester | | | | | |

### Beispiel D: Wirkungssteigerung durch Ammoniumsalze in Kombination mit Penetrationsförderern

### Aphis gossypii -Test (APHIGO)

| | | |
|---|---|---|
| Lösungsmittel: | 7 | Gewichtsteile Dimethylformamid |
| Emulgator: | 2(Tabelle D1) / 1(Tabelle D2) | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Bei erforderlicher Zugabe von Ammoniumsalzen, Penetrationsförderer oder Ammoniumsalzen und Penetrationsförderer werden diese in einer Konzentration von 1000 ppm nach dem Verdünnen jeweils der fertigen Präparatelösung zupipettiert.

Baumwollblätter *(Gossypium hirsutum),* die stark von der Baumwollblattlaus *(Aphis gossypii)* befallen sind, werden mit einer Wirkstoffzubereitung mit der gewünschten Konzentration gespritzt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

**Tabelle D1**

| Wirkstoff | Wirkstoff ppm | Abtötungsgrad / % nach 6 Tagen | | | |
|---|---|---|---|---|---|
| | | a.i. | + AS (1000 ppm) | + RME (1000 ppm) | + RME + AS (je 1000 ppm) |
| 226 | 4 | 20 | 20 | 35 | 55 |
| 226 | 0,8 | 0 | 0 | 20 | 35 |
| 44 | 4 | 5 | 25 | 45 | 55 |

| | | | | | |
|---|---|---|---|---|---|
| RME = Rapsölmethylester (formuliert als 500 EW, Konzentrationsangabe in g Wirkstoff /1) AS = Ammoniumsulfat | | | | | |

**Tabelle D2**

| Wirkstoff | Wirkstoff g/ha | Abtötungsgrad / % nach 7 Tagen | | | |
|---|---|---|---|---|---|
| | | a.i. | +RME (1000 ppm) | + AS (1000 ppm) | +RME +AS (je 1000 ppm) |
| 83 | 2,4 | 10 | 30 | 55 | 85 |
| 41 | 2,4 | 50 | 10 | 80 | 93 |

| | | | | | |
|---|---|---|---|---|---|
| AS = Ammoniumsulfat RME = Rapsölmethylester | | | | | |

**Beispiel E: Wirkungssteigerung durch Ammoniumsalze**

### Tetranychus-Test (OP-resistent)

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Bei erforderlicher Zugabe von Ammoniumsalzen werden diese in einer Konzentration von 1000 ppm nach dem Verdünnen jeweils der fertigen Präparatelösung zupipettiert.

Bohnenpflanzen *(Phaseolus vulgaris),* die stark von allen Stadien der Gemeinen Spinnmilbe *(Tetranychus urticae)* befallen sind, werden durch Sprühe mit der Wirkstoffzubereitung in der gewünschten Konzentration behandelt.

Nach der gewünschten Zeit wird die Abtötung in % bestimmt. Dabei bedeutet 100 %, dass alle Spinnmilben abgetötet wurden; 0 % bedeutet, dass keine Spinnmilben abgetötet wurden.

**Tabelle E**

| Wirkstoff | Wirkstoff ppm | Abtötungsgrad / % nach 6 Tagen | |
|---|---|---|---|
| | | a.i. | + AS (1000 ppm) |
| 44 | 20 | 40 | 70 |
| 225 | 20 | 20 | 80 |

| | | | |
|---|---|---|---|
| AS = Ammoniumsulfat | | | |

### Beispiel F: Wirkungssteigerung durch Ammoniumsalze in Kombination mit Penetrationsförderern

### Tetranychus-Test (OP-resistent)

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Bei erforderlicher Zugabe von Ammoniumsalzen, Penetrationsförderer oder Ammoniumsalzen und Penetrationsförderer werden diese in einer Konzentration von 1000 ppm nach dem Verdünnen jeweils der fertigen Präparatelösung zupipettiert.

Bohnenpflanzen *(Phaseolus vulgaris),* die stark von allen Stadien der Gemeinen Spinnmilbe *(Tetranychus urticae)* befallen sind, werden durch Sprühe mit der Wirkstoffzubereitung in der gewünschten Konzentration behandelt.

Nach der gewünschten Zeit wird die Abtötung in % bestimmt. Dabei bedeutet 100 %, dass alle Spinnmilben abgetötet wurden; 0 % bedeutet, dass keine Spinnmilben abgetötet wurden.

**Tabelle F**

| Wirkstoff | Wirkstoff ppm | Abtötungsgrad / % nach 6 Tagen | | | |
|---|---|---|---|---|---|
| | | a.i. | + AS (1000 ppm) | + RME (1000 ppm) | + RME + AS (je 1000 ppm) |
| 42-A | 4 | 70 | 50 | 75 | 95 |
| 42-A | 0,8 | 50 | 30 | 45 | 80 |
| 226 | 20 | 50 | 70 | 60 | 90 |

| | | | | | |
|---|---|---|---|---|---|
| RME = Rapsölmethylester (formuliert als 500 EW, Konzentrationsangabe in g Wirkstoff /1) AS = Ammoniumsulfat | | | | | |

## Patentansprüche

1. Zusammensetzung umfassend
- mindestens einen insektiziden und/oder akariziden Wirkstoff aus der Klasse der 2-Cyanobenzolsulfonamide und deren isomerer Formen
- mindestens ein Salz der Formel (II) 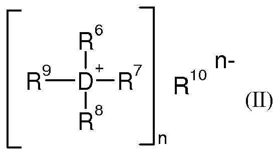 in welcher
D für Stickstoff oder Phosphor steht,
R⁶, R⁷, R⁸ und R⁹ unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
n für 1, 2, 3 oder 4 steht,
R¹⁰ für ein anorganisches oder organisches Anion steht.

2. Zusammensetzung gemäß Anspruch 1, **dadurch gekennzeichnet, dass** der Wirkstoff ein 2-Cyanobenzolsulfonamid der allgemeinen Formel (I) ist 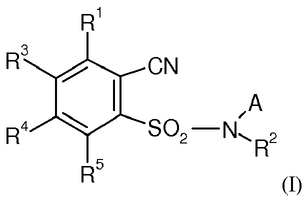 in welcher
A für Wasserstoff, C₁-C₆-Alkyl, C₂-C₆-Alkenyl steht
R¹ für Wasserstoff, Halogen, C₁-C₄-Alkyl, C₁-C₄-Halogenalkyl, C₁-C₄-Alkoxy oder C₁-C₄-Halogenalkoxy steht;
R² für Wasserstoff, C₁-C₆-Alkyl, C₂-C₆-Alkenyl, C₂-C₆-Alkinyl, C₃-C₈-Cycloalkyl oder C₁-C₄-Alkoxy, wobei die fünf letztgenannten Reste unsubstituiert, teilweise oder vollständig halogeniert sein können und/oder einen, zwei oder drei Reste aus der Gruppe C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₁-C₄-Alkoxycarbonyl, Cyano, Amino, (C₁-C₄-Alkyl)amino, Di-(C₁-C₄-alkyl)amino, C₃-C₈-Cycloalkyl und Phenyl tragen können, wobei das Phenyl unsubstituiert, teilweise oder vollständig halogeniert sein kann und/oder einen, zwei oder drei Substituenten aus der Gruppe C₁-C₄-Alkyl, C₁-C₄-Halogenalkyl, C₁-C₄-Alkoxy, C₁-C₄-Halogenalkoxy tragen kann, steht;
R³, R⁴ und R⁵ unabhängig voneinander für Wasserstoff, Halogen, Cyano, Nitro, C₁-C₆-Alkyl, C₃-C₈-Cycloalkyl, C₁-C₄-Halogenalkyl, C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₂-C₆-Alkenyl, C₂-C₆-Alkinyl, C₁-C₄-Alkoxycarbonyl, Amino, (C₁-C₄-Alkyl)amino, Di-(C₁-C₄-alkyl)amino, Aminocarbonyl, (C₁-C₄-Alkyl)aminocarbonyl und Di-(C₁-C₄-alkyl)aminocarbonyl stehen;

3. Zusammensetzung gemäß Anspruch 1 oder 2, **dadurch gekennzeichnet, dass** der Wirkstoff ein 2-Cyanobenzolsulfonamid der allgemeinen Formel (I) und/oder der isomeren Form (I-A) ist 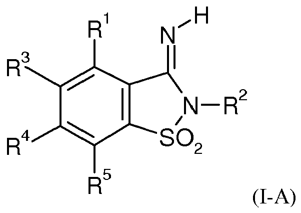 in welcher
R¹ für Wasserstoff, Halogen, C₁-C₄-Alkyl, C₁-C₄-Halogenalkyl, C₁-C₄-Alkoxy oder C₁-C₄-Halogenalkoxy steht;
R² für C₁-C₆-Alkyl, C₂-C₆-Alkenyl, C₂-C₆-Alkinyl, C₃-C₈-Cycloalkyl oder C₁-C₄-Alkoxy, wobei die fünf letztgenannten Reste unsubstituiert, teilweise oder vollständig halogeniert sein können und/oder einen, zwei oder drei Reste aus der Gruppe C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₁-C₄-Alkoxycarbonyl, Cyano, Amino, (C₁-C₄-Alkyl)amino, Di-(C₁-C₄-alkyl)amino, C₃-C₈-Cycloalkyl und Phenyl tragen können, wobei das Phenyl unsubstituiert, teilweise oder vollständig halogeniert sein kann und/oder einen, zwei oder drei Substituenten aus der Gruppe C₁-C₄-Alkyl, C₁-C₄-Halogenalkyl, C₁-C₄-Alkoxy, C₁-C₄-Halogenalkoxy tragen kann, steht;
R³ R⁴ und R⁵ unabhängig voneinander für Wasserstoff, Halogen, Cyano, Nitro, C₁-C₆-Alkyl, C₃-C₈-Cycloalkyl, C₁-C₄-Halogenalkyl, C₁-C₄-Alkoxy, C₁-C₄-Alkylthio, C₁-C₄-Alkylsulfinyl, C₁-C₄-Alkylsulfonyl, C₁-C₄-Halogenalkoxy, C₁-C₄-Halogenalkylthio, C₂-C₆-Alkenyl, C₂-C₆-Alkinyl, C₁-C₄-Alkoxycarbonyl, Amino, (C₁-C₄-Alkyl)amino, Di-(C₁-C₄-alkyl)amino, Aminocarbonyl, (C₁-C₄-Alkyl)aminocarbonyl und Di-(C₁-C₄-alkyl)aminocarbonyl stehen;

4. Zusammensetzung gemäß Anspruch 1 oder 2, **dadurch gekennzeichnet, dass** der Wirkstoff ein 2-Cyanobenzolsulfonamid der allgemeinen Formel (I) und/oder der isomeren Form (I-B) ist 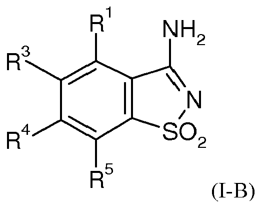 in welcher
R¹, R³, R⁴, R⁵ die in Anspruch 2 angegebenen Bedeutungen haben.

5. Zusammensetzung gemäß der Ansprüche 1 bis 4, **dadurch gekennzeichnet, dass** der Wirkstoffgehalt zwischen 0,5 und 50 Gew. % beträgt.

6. Zusammensetzung gemäß der Ansprüche 1 bis 5, **dadurch gekennzeichnet, dass** der Gehalt an Ammonium- oder Phosphoniumsalz zwischen 0.5 und 80 mmol/l beträgt.

7. Zusammensetzung gemäß der Ansprüche 1 bis 6, **dadurch gekennzeichnet, dass** D für Stickstoff steht.

8. Zusammensetzung gemäß Anspruch 7, **dadurch gekennzeichnet, dass** R¹⁰ für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat oder Oxalat steht.

9. Zusammensetzung gemäß Anspruch 7, **dadurch gekennzeichnet, dass** R¹⁰ für Thiocyanat, Dihydrogenphosphat, Monohydrogenphosphat oder Sulfat steht.

10. Zusammensetzung gemäß Anspruch 7, **dadurch gekennzeichnet, dass** R¹⁰ für Sulfat steht.

11. Zusammensetzung gemäß der Ansprüche 1 bis 10, **dadurch gekennzeichnet, dass** sie mindestens einen Penetrationsförderer enthält.

12. Zusammensetzung gemäß Anspruch 11, **dadurch gekennzeichnet, dass** der Penetrationsförderer ein Fettalkohol-Alkoxylat der Formel (III)
R-O-(-AO)ᵥ₋R' (III)
in welcher
R für geradkettiges oder verzweigtes Alkyl mit 4 bis 20 Kohlenstoffatomen steht,
R' für Wasserstoff, Methyl, Ethyl, n-Propyl, i-Propyl, n-Butyl, i-Butyl, t-Butyl, n-Pentyl oder n-Hexyl steht,
AO für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
v für Zahlen von 2 bis 30 steht,
oder ein mineralisches oder vegetabiles Öl oder der Ester eines mineralischen oder vegetabilen Öls ist.

13. Zusammensetzung gemäß Anspruch 11, **dadurch gekennzeichnet, dass** der Penetrationsförderer Rapsölmethylester ist.

14. Zusammensetzung gemäß der Ansprüche 1 bis 13, **dadurch gekennzeichnet, dass** der Gehalt an Penetrationsförderer 1 bis 95 Gew. % beträgt.

15. Verfahren zur Bekämpfung von Schadinsekten und/oder Spinnmilben, **dadurch gekennzeichnet, dass** eine Zusammensetzung gemäß einem oder mehreren der Ansprüche 1 bis 14 unverdünnt oder verdünnt in solcher Menge auf Insekten und/oder Spinnmilben oder ihren Lebensraum appliziert wird, dass eine wirksame Menge der enthaltenen insektiziden Wirkstoffe auf die Insekten und/oder Spinnmilben oder ihren Lebensraum wirkt.

16. Verfahren zur Steigerung der Wirkung von Pflanzenschutzmitteln enthaltend einen Wirkstoff aus der Klasse der 2-Cyanobenzolsulfonamide der allgemeinen Formel (I) und/oder deren isomerer Formen (I-A) oder (I-B) gemäß der Ansprüche 2 bis 4, **dadurch gekennzeichnet, dass** das anwendungsfertige Mittel (Spritzbrühe) unter Einsatz eines Salzes der Formel (II) gemäß Anspruch 1 zubereitet wird.

17. Verfahren gemäß Anspruch 16, **dadurch gekennzeichnet, dass** die Spritzbrühe unter Einsatz eines Penetrationsförderers zubereitet wird.

18. Verfahren gemäß Anspruch 16 oder 17, **dadurch gekennzeichnet, dass** der Penetrationsförderer in einer Endkonzentration von 0,1 bis 10 g/l und/oder das Salz der Formel (II) in einer Endkonzentration von 0,5 bis 80 mmol/l vorliegt.

19. Verwendung eines Salzes der Formel (II) gemäß Anspruch 1 zur Steigerung der Wirkung eines Pflanzenschutzmittels enthaltend einen Wirkstoff aus der Klasse der 2-Cyanobenzolsulfonamid der allgemeinen Formel (I) und/oder deren isomerer Form (I-A) oder (I-B) gemäß der Ansprüche 2 bis 4, **dadurch gekennzeichnet, dass** das Salz bei der Zubereitung eines anwendungsfertigen Pflanzenschutzmittels (Spritzbrühe) eingesetzt wird.

20. Verwendung gemäß Anspruch 19, **dadurch gekennzeichnet, dass** das Salz der Formel (II) in dem anwendungsfertigen Pflanzenschutzmittel in einer Konzentration von 0,5 bis 80 mmol/l vorliegt.

21. Verwendung gemäß Anspruch 19 oder 20, **dadurch gekennzeichnet, dass** das Salz bei der Zubereitung eines anwendungsfertigen Pflanzenschutzmittels (Spritzbrühe) eingesetzt wird, das weiterhin einen Penetrationsförderer enthält.
